(19) Europäisches Patentamt
European Patent Office
Office européen des brevets

(11) EP 2 511 334 B1

# (12) EUROPEAN PATENT SPECIFICATION

(45) Date of publication and mention of the grant of the patent:
**25.04.2018 Bulletin 2018/17**

(21) Application number: **11732874.0**

(22) Date of filing: **12.01.2011**

(51) Int Cl.:
***B60C 1/00*** $^{(2006.01)}$ ***C08K 3/04*** $^{(2006.01)}$
***C08K 3/36*** $^{(2006.01)}$ ***C08K 5/548*** $^{(2006.01)}$
***C08L 21/00*** $^{(2006.01)}$ ***C08L 15/00*** $^{(2006.01)}$

(86) International application number:
**PCT/JP2011/050306**

(87) International publication number:
**WO 2011/087004 (21.07.2011 Gazette 2011/29)**

## (54) TYRE RUBBER COMPOSITION AND PNEUMATIC TYRE

REIFENGUMMIZUSAMMENSETZUNG UND LUFTREIFEN

COMPOSITION DE GOMME POUR PNEUS, ET PNEU AINSI OBTENU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.01.2010 JP 2010005019**

(43) Date of publication of application:
**17.10.2012 Bulletin 2012/42**

(73) Proprietor: **Sumitomo Rubber Industries, Ltd.**
**Kobe-shi, Hyogo 651-0072 (JP)**

(72) Inventors:
- **HATTORI Takayuki**
**Kobe-shi**
**Hyogo 651-0072 (JP)**
- **MATSUURA Ai**
**Kobe-shi**
**Hyogo 651-0072 (JP)**
- **IMOTO Yoji**
**Kobe-shi**
**Hyogo 651-0072 (JP)**
- **HIRAYAMA Michio**
**Kobe-shi**
**Hyogo 651-0072 (JP)**
- **UESAKA Kenichi**
**Kobe-shi**
**Hyogo 651-0072 (JP)**

(74) Representative: **Manitz Finsterwald Patentanwälte PartmbB**
**Martin-Greif-Strasse 1**
**80336 München (DE)**

(56) References cited:

| | |
|---|---|
| **EP-A2- 1 078 954** | **WO-A1-00/73092** |
| **WO-A1-2009/048006** | **WO-A1-2010/126095** |
| **JP-A- 11 323 027** | **JP-A- 62 062 838** |
| **JP-A- 2001 089 605** | **JP-A- 2003 192 842** |
| **JP-A- 2003 321 576** | **JP-A- 2003 500 280** |
| **JP-A- 2006 182 940** | **JP-A- 2006 233 177** |
| **JP-A- 2007 238 803** | **JP-A- 2008 050 570** |
| **JP-A- 2009 091 482** | **JP-A- 2010 241 898** |
| **JP-A- 2011 057 965** | **JP-A- 2011 074 332** |
| **US-B2- 7 628 971** | |

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### TECHNICAL FIELD

The present invention relates to a tire rubber composition and a pneumatic tire produced using the tire rubber composition.

### BACKGROUND ART

Today, in order to reduce the fuel consumption, silica-containing rubber compositions have been used not only for treads but also for various components. However, since silica has a hydrophilic silanol group on its surface, silica has lower affinity for rubber (in particular, natural rubber, butadiene rubber, styrene-butadiene rubber, and other rubbers often used for tires) than carbon black. Thus, in many cases with silica, the abrasion resistance and mechanical strength (tensile strength and elongation at break) tend to be poor.
There are known methods to improve these points by using a silane coupling agent or finely-divided silica having high reinforcement effect. However, finely-divided silica is usually very difficult to disperse in a rubber composition. Accordingly, the silica is not well dispersed and its agglomerates remain, so that the abrasion resistance and mechanical strength cannot be much improved or even may be deteriorated.
Patent Document 1 discloses a tire rubber composition which contains silica and improves in wet grip performance without deterioration in terms of rolling resistance and abrasion resistance. However, such a rubber composition still has room for improvement in improving these performances in a balanced manner.
WO 2009/048006 A1 discloses a rubber composition for a tire tread comprising apart from a rubber component a first silica having a $N_2SA$ of at most 100 $m^2/g$ and a second silica having a $N_2SA$ of at least 180 $m^2/g$.
EP 1 078 954 A2 relates to a rubber composition including two different kinds of silica, wherein the first silica has a BET surface area of at most 130 $m^2/g$ and the second silica has a BET surface area of between 130 and 200 $m^2/g$. A similar rubber composition is also known from WO 00/73092 A1.
Patent Document 1: JP 2008-31244 A

### SUMMARY OF THE INVENTION

### PROBLEMS TO BE SOLVED BY THE INVENTION

An object of the present invention is to provide a tire rubber composition which has good silica dispersibility and improves in terms of the reinforcement, the abrasion resistance, the mechanical strength, the rolling resistance, the wet grip performance, and the handling stability on a dry road surface in a balanced manner so as to solve the above problems; and to provide a pneumatic tire produced using the tire rubber composition.

### MEANS FOR SOLVING THE PROBLEMS

The present invention relates to a tire rubber composition, comprising: a rubber component; a carbon black; a first silica; and a second silica, wherein the first silica has a CTAB specific surface area of 180 $m^2/g$ or more, a BET specific surface area of 185 $m^2/g$ or more, and an aggregate size of 45 nm or more, and the second silica has a CTAB specific surface area of 95 $m^2/g$ or less, and a BET specific surface area of 100 $m^2/g$ or less.
The total amount of natural rubber and butadiene rubber in 100% by mass of the rubber component is preferably 10% by mass or more.
The total amount of modified styrene-butadiene rubber and modified butadiene rubber in 100% by mass of the rubber component is preferably 25% by mass or more.
The rubber composition preferably comprises a mercapto group-containing silane coupling agent.
Preferably, the silane coupling agent is a copolymer comprising units A represented by the following formula (1) and units B represented by the following formula (2), and the proportion of the units B is 1 to 70 mol% of the total molar amount of the units A and the units B:

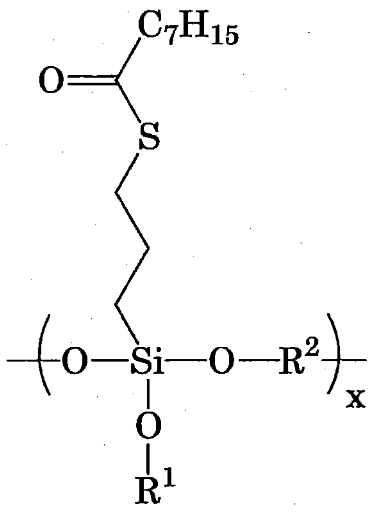

(1)

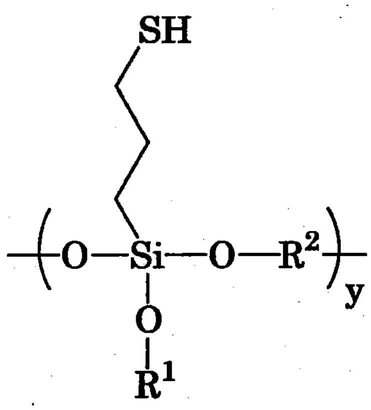

(2)

wherein x is an integer of 0 or more; y is an integer of one or more; $R^1$ represents hydrogen, a halogen, a branched or unbranched C1-30 alkyl or alkylene group, a branched or unbranched C2-30 alkenyl or alkenylene group, a branched or unbranched C2-30 alkynyl or alkynylene group, or a group in which a hydrogen atom at the end of the alkyl or alkenyl group is replaced with a hydroxy or carboxyl group; $R^2$ represents hydrogen, a branched or unbranched C1-30 alkylene or alkyl group, a branched or unbranched C2-30 alkenylene or alkenyl group, or a branched or unbranched C2-30 alkynylene or alkynyl group; and $R^1$ and $R^2$ may form a ring structure together.

Preferably, the total amount of the first silica and the second silica is 20 to 150 parts by mass, and the amount of carbon black is 100 parts by mass or less, based on 100 parts by mass of the rubber component.

The tire rubber composition is preferably used for a tread.

The present invention also relates to a pneumatic tire produced using the rubber composition.

EFFECT OF THE INVENTION

The tire rubber composition according to the present invention comprises a rubber component; a first silica having a CTAB specific surface area of a predetermined value or more, a BET specific surface area of a predetermined value or more, and an aggregate size of a predetermined value or more; and a second silica having a CTAB specific surface area of a predetermined value or less and a BET specific surface area of a predetermined value or less. Accordingly, the tire rubber composition has good silica dispersibility and can provide a pneumatic tire which shows well-balanced performances in terms of the reinforcement, the abrasion resistance, the mechanical strength, the rolling resistance, the wet grip performance, and the handling stability on a dry road surface.

As used herein, when simply referring to "silica," it is intended to include the first silica and the second silica.

BRIEF DESCRIPTION OF THE DRAWINGS

Fig. 1 is a view illustrating a pore distribution curve.

MODSE FOR CARRYING OUT THE INVENTION

The tire rubber composition of the present invention comprises a rubber component; a first silica having a CTAB specific surface area of a predetermined value or more, a BET specific surface area of a predetermined value or more, and an aggregate size of a predetermined value or more; and a second silica having a CTAB specific surface area of a predetermined value or less and a BET specific surface area of a predetermined value or less. The first silica has a CTAB specific surface area and a BET specific surface area as large as those of conventional finely-divided silica, and has an aggregate size larger than that of conventional finely-divided silica which has a comparable average primary particle size. Compared to a combination of conventional finely-divided silica and the second silica, a combination of the first silica and the second silica shows better silica dispersibility, and thus provides excellent reinforcement, abrasion resistance, and mechanical strength. Further, the latter combination provides improvements in terms of the rolling resistance, the wet grip performance, and the handling stability on a dry road surface (hereinafter, also referred to as dry handling stability).

Examples of rubbers which may be contained in the rubber component in the present invention include, but not particularly limited to, ones generally used for tire rubber compositions, such as natural rubber (NR), epoxidized natural rubber (ENR), isoprene rubber (IR), butadiene rubber (BR), modified butadiene rubber (modified BR), styrene-butadiene rubber (SBR), modified styrene-butadiene rubber (modified SBR), styrene-isoprene-butadiene rubber (SIBR), ethylene-propylene-diene rubber (EPDM), chloroprene rubber (CR), and acrylonitrile-butadiene rubber (NBR). Particularly, the rubber component preferably includes at least one selected from the group consisting of NR, BR, SBR, modified SBR, and modified BR, and more preferably includes NR and/or BR.

As used herein, when simply referring to "butadiene rubber (BR)," it is intended not to include modified BR, and when simply referring to "styrene-butadiene rubber (SBR)," it is intended not to include modified SBR.

The addition of NR and/or BR to the rubber composition of the present invention results in a further improvement in terms of abrasion resistance and rolling resistance. Meanwhile, conventionally, rubber compositions containing a large amount of silica and rubber compositions containing a large amount of silica together with modified SBR and/or modified BR have a problem of reduced processability. However, the addition of NR to the rubber composition of the present invention enables a remarkable improvement in processability, so that such a problem can be solved.

Since NR and BR have low polarity and are incompatible with silica, a rubber composition containing silica together with NR and/or BR tends to have poor silica dispersibility. Such a tendency is remarkably created particularly in the case of using conventional finely-divided silica with poor dispersibility. Since the first silica, which has an aggregate size larger than that of conventional finely-divided silica, improves in the silica dispersibility in a rubber composition, the first silica is particularly effective for a rubber composition containing NR and/or BR. Further, the addition of a combination of the first silica and the second silica to a rubber composition containing NR and/or BR results in a remarkable improvement in the silica dispersibility, and the mechanical strength.

Examples of the NR include, but not particularly limited to, ones generally used in the rubber industry, such as RSS#3 and TSR20.

Examples of the BR include, but not particularly limited to, ones generally used in the rubber industry. Particularly, the BR preferably has a cis content (cis-1,4-butadiene unit content) of 80% by mass or more. This results in more favorable abrasion resistance. The cis content is more preferably 85% by mass or more, still more preferably 90% by mass or more, and most preferably 95% by mass or more.

The cis content can be determined by infrared absorption spectrum analysis.

Further, the BR preferably has a viscosity of 40 cps or more in the form of a 5% solution in toluene at 25°C. This promotes the abrasion resistance enhancement. The viscosity of the BR solution in toluene is preferably 200 cps or less. If the viscosity exceeds 200 cps, the processability tends to be poor and the BR is not likely to be easily mixed with other rubbers, due to such an excessively high viscosity. The upper limit of the viscosity of the BR solution in toluene is more preferably 150 cps.

In addition, BR having a molecular weight distribution (Mw/Mn) of 3.0 to 3.4 may be used in order to improve both processability and abrasion resistance.

The BR is preferably synthesized from a biomass-derived material in order to reduce environmental load. Such BR may be produced, for example, by a method including reacting a catalyst with bioethanol to produce butadiene and synthesizing BR from the butadiene as a raw material. Although the BR synthesized from a biomass-derived material may be blended as a part of the BR component, the BR component in the rubber composition particularly preferably includes 100% by mass of biomass-derived BR. The biomass-derived material means a "renewable organic resource of biological origin except fossil resources." Whether the material is biomass-derived may be checked by the method of determining the amount of $^{14}C$ (ASTM-D6866).

The amount of NR in 100% by mass of the rubber component is preferably 5% by mass or more, more preferably 15% by mass or more, and still more preferably 25% by mass or more. If the amount is less than 5% by mass, such a rubber composition may be difficult to provide the necessary mechanical strength and wet grip performance. The amount

of NR is preferably 60% by mass or less, and more preferably 50% by mass or less. If the amount exceeds 60% by mass, the relative proportion of another rubber such as BR is reduced, and such a rubber composition may be difficult to provide the necessary abrasion resistance and crack resistance.

The amount of BR in 100% by mass of the rubber component is preferably 5% by mass or more, and more preferably 10% by mass or more. If the amount is less than 5% by mass, such a rubber composition may be difficult to provide the necessary abrasion resistance and crack resistance. The amount of BR is preferably 80% by mass or less, and more preferably 70% by mass or less. If the amount exceeds 80% by mass, the relative proportion of another rubber such as NR is reduced, and such a rubber composition may be difficult to provide the necessary mechanical strength, and wet grip performance.

The total amount of NR and BR in 100% by mass of the rubber component is preferably 10% by mass or more, more preferably 25% by mass or more, and still more preferably 40% by mass or more. If the total amount is less than 10% by mass, a sufficient improvement in terms of abrasion resistance and rolling resistance may not be provided. The total amount of NR and BR may be 100% by mass, and is preferably 80% by mass or less, and more preferably 60% by mass or less. If the total amount exceeds 80% by mass, it may be difficult for the rubber composition used for a cap tread to provide the necessary wet grip performance, and it may be difficult to improve performance by using a rubber other than NR and BR.

The addition of SBR to the rubber composition of the present invention enables a further improvement in the silica dispersibility. Examples of the SBR include, but not particularly limited to, ones generally used in the tire industry, such as emulsion-polymerized styrene-butadiene rubber (E-SBR) and solution-polymerized styrene-butadiene rubber (S-SBR).

The styrene content of SBR is preferably 5% by mass or more, more preferably 15% by mass or more, and still more preferably 20% by mass or more. If the styrene content of SBR is less than 5% by mass, the resulting rubber composition when used for a cap tread may not provide sufficient grip performance. The styrene content of SBR is preferably 60% by mass or less, more preferably 45% by mass or less, and still more preferably 30% by mass or less. If the styrene content of SBR exceeds 60% by mass, the compatibility with BR or NR tends to decrease, the hardness tends to excessively increase, and the performances in term of abrasion resistance and rolling resistance tend to be poor.

The styrene content, the cis content, and the vinyl content are determined by $^{1}H$-NMR measurement.

The amount of SBR in 100% by mass of the rubber component is preferably 10% by mass or more, more preferably 25% by mass or more, and still more preferably 40% by mass or more. If the amount is less than 10% by mass, such a rubber composition when used for a cap tread may not provide sufficient grip performance. The amount of SBR may be 100% by mass, and is preferably 80% by mass or less, more preferably 60% by mass or less, and still more preferably 55% by mass or less. If the amount exceeds 80% by mass, the relative proportion of BR or NR is reduced, and a problem may arise in terms of abrasion resistance, crack resistance, and rolling resistance.

The addition of modified SBR and/or modified BR to the rubber composition of the present invention enables a further improvement in terms of rolling resistance. By using a combination of the first silica and the second silica for a rubber composition containing modified SBR and/or modified BR, the processability and mechanical strength can be remarkably improved compared with the case of using a combination of conventional finely-divided silica and the second silica. Meanwhile, if conventional finely-divided silica is added to a rubber composition containing modified SBR and/or modified BR, the mechanical strength tends to be reduced, thereby leading to a decrease in cut-and-chip resistance. Therefore, such a rubber composition is disadvantageously difficult to be used for a tread. In contrast, according to the present invention, the use of the first silica instead of the conventional finely-divided silica enables an improvement in mechanical strength, so that the problem can be solved.

Examples of the SBR to be modified include, but not particularly limited to, ones generally used in the tire industry, such as emulsion-polymerized styrene-butadiene rubber (E-SBR) and solution-polymerized styrene-butadiene rubber (S-SBR). Particularly, S-SBR is preferably used because S-SBR can be produced by living polymerization and it is easy to introduce a functional group into its terminal.

Examples of the functional group to be introduced in the modified SBR include an amino group, a hydroxyl group, an epoxy group, an alkylsilyl group, an alkoxysilyl group, a carboxyl group, a lactam group, a glycidyl group, a carbonyl group, an ester group, a hydroxy group, a silanol group, a silyloxy group, an acetal group, and a mercapto group. An amino group, an epoxy group, an alkylsilyl group, and an alkoxysilyl group are preferred because they are particularly excellent in the adhesion with silica, which results in further reduction in rolling resistance. An amino group is more preferred. One or two or more types of the functional group may be introduced in the modified SBR.

The styrene content of modified SBR is preferably 5% by mass or more, more preferably 15% by mass or more, and still more preferably 20% by mass or more. If the styrene content of modified SBR is less than 5% by mass, the resulting rubber composition when used for a cap tread may not provide sufficient grip performance. The styrene content of modified SBR is preferably 60% by mass or less, more preferably 45% by mass or less, and still more preferably 30% by mass or less. If the styrene content of modified SBR exceeds 60% by mass, the performance in terms of rolling resistance tends to be poor, the compatibility with BR or NR tends to decrease, and the hardness tends to excessively

increase.

The cis content of modified SBR is preferably 1% by mass or more, more preferably 5% by mass or more, still more preferably 7% by mass or more, and most preferably 15% by mass or more. Modified SBR with a cis content of less than 1% by mass may be difficult to synthesize and may also be difficult to process because of its high crystallinity. The cis content of modified SBR is preferably 50% by mass or less, more preferably 40% by mass or less, and still more preferably 30% by mass or less. If the cis content of modified SBR exceeds 50% by mass, the Tg may excessively decrease, and therefore the rubber composition when used for a cap tread may be difficult to provide sufficient grip performance.

The vinyl content of modified SBR is preferably 5% by mass or more, more preferably 10% by mass or more, still more preferably 30% by mass or more, and particularly preferably 50% by mass or more. If the vinyl content of modified SBR is less than 5% by mass, the performance balance between wet grip performance and rolling resistance tends to be poor. The vinyl content of modified SBR is preferably 80% by mass or less, more preferably 75% by mass or less, and still more preferably 70% by mass or less. If the vinyl content of modified SBR exceeds 80% by mass, the abrasion resistance tends to significantly decrease, and the cure time tends to increase.

Examples of the BR to be modified include, but not particularly limited to, ones generally used in the rubber industry, such as BR with a high cis content (e.g. BR1220 produced by Zeon Corporation, and BR130B and BR150B produced by Ube Industries, Ltd.); BR with a low cis content; and BR containing syndiotactic polybutadiene crystals (e.g. VCR412 and VCR617 produced by Ube Industries, Ltd.).

Examples of the functional group to be introduced in the modified BR include functional groups similar to those which are to be introduced in the above modified SBR. Preferred functional groups are also the same as those described above. One or two or more types of the functional group may be introduced in the modified BR.

The cis content of modified BR is preferably 10% by mass or more, more preferably 20% by mass or more, and still more preferably 80% by mass or more. Modified BR with a cis content of less than 10% by mass may be difficult to synthesize and may also be difficult to process because of its high crystallinity. Modified BR with a higher cis content is more preferred, but modified BR with a cis content of 99% by mass or less can actually be synthesized. The cis content is preferably 98% by mass or less, and more preferably 96% by mass or less in terms of easy industrial synthesis.

Modified BR with a lower vinyl content is more preferred, but modified BR with a vinyl content of 1% by mass or more can actually be synthesized. The vinyl content is preferably 2% by mass or more, more preferably 4% by mass or more, and particularly preferably 8% by mass or more in terms of easy industrial synthesis. Modified BR with a vinyl content of less than 1% by mass may be difficult to industrially synthesize, thereby resulting in high costs. In addition, the performance balance between wet grip performance and rolling resistance tends to be poor. The vinyl content of modified BR is preferably 35% by mass or less, more preferably 25% by mass or less, and still more preferably 20% by mass or less. If the vinyl content of modified BR exceeds 35% by mass, the abrasion resistance tends to significantly decrease and the cure time tends to increase.

One preferred example of the modified SBR or modified BR (particularly, modified BR) which may be contained in the rubber composition of the present invention is a rubber modified by a compound represented by formula (3) (S-modified rubber). This enables a stronger bonding between the filler and the rubber component, which leads to an improvement in the filler dispersibility. The S-modified rubber can particularly promote the dispersion of silica.

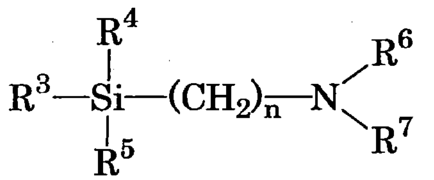 (3)

In the formula, $R^3$, $R^4$, and $R^5$ are the same as or different from one another and each represent an alkyl group, an alkoxy group, a silyloxy group, an acetal group, a carboxyl group, a mercapto group, or a derivative thereof; $R^6$ and $R^7$ are the same as or different from each other and each represent a hydrogen atom or an alkyl group; and n represents an integer.

In the compound represented by formula (3), $R^3$, $R^4$, and $R^5$ are the same as or different from one another, and each represent an alkyl group, an alkoxy group, a silyloxy group, an acetal group, a carboxyl group (-COOH), a mercapto group (-SH), or a derivative thereof. Examples of the alkyl group include C1-4 alkyl groups such as a methyl group, an ethyl group, an n-propyl group, an isopropyl group, an n-butyl group, and a t-butyl group. Examples of the alkoxy group include C1-8 (preferably C1-6, and more preferably C1-4) alkoxy groups such as a methoxy group, an ethoxy group, an n-propoxy group, an isopropoxy group, an n-butoxy group, and a t-butoxy group. Examples of the alkoxy group also include cycloalkoxy groups (e.g. C5-8 cycloalkoxy groups such as a cyclohexyloxy group), and aryloxy groups (e.g. C6-8 aryloxy groups such as a phenoxy group and a benzyloxy group).

Examples of the silyloxy group include silyloxy groups containing a C1-20 aliphatic group or aromatic group as a substituent, such as a trimethylsilyloxy group, a triethylsilyloxy group, a triisopropylsilyloxy group, a diethylisopropylsilyloxy group, a t-butyldimethylsilyloxy group, a t-butyldiphenylsilyloxy group, a tribenzylsilyloxy group, a triphenylsilyloxy group, and a tri-p-xylylsilyloxy group.

Examples of the acetal group include groups represented by -C(RR')-OR" or -O-C(RR')-OR". Examples of the groups represented by the former formula include a methoxymethyl group, an ethoxymethyl group, a propoxymethyl group, a butoxymethyl group, an isopropoxymethyl group, a t-butoxymethyl group, and a neopentyloxymethyl group. Examples of the groups represented by the latter formula include a methoxymethoxy group, an ethoxymethoxy group, a propoxymethoxy group, an i-propoxymethoxy group, an n-butoxymethoxy group, a t-butoxymethoxy group, an n-pentyloxymethoxy group, an n-hexyloxymethoxy group, a cyclopentyloxymethoxy group, and a cyclohexyloxymethoxy group. $R^3$, $R^4$, and $R^5$ are each preferably an alkoxy group, and particularly preferably a methoxy group or an ethoxy group, for a further improvement in terms of rolling resistance and wet grip performance.

Examples of the alkyl group for $R^6$ or $R^7$ include the same groups as those mentioned above as the alkyl group. $R^6$ and $R^7$ are each preferably an alkyl group, and particularly preferably a methyl group or an ethyl group, for a further improvement in terms of rolling resistance and wet grip performance.

The n (integer) is preferably 1 to 5. In this case, a further improvement in terms of reinforcement, abrasion resistance, mechanical strength, rolling resistance, wet grip performance, and dry handling stability can be provided. The n is more preferably 2 to 4, and most preferably 3. If the n is 0, the silicon atom and the nitrogen atom are less likely to be bonded to each other. If the n is 6 or more, the modifying effect may be reduced.

Specific examples of the compound represented by formula (3) include: 3-aminopropyldimethylmethoxysilane, 3-aminopropylmethyldimethoxysilane, 3-aminopropylethyldimethoxysilane, 3-aminopropyltrimethoxysilane, 3-aminopropyldimethylethoxysilane, 3-aminopropylmethyldiethoxysilane, 3-aminopropyltriethoxysilane, 3-aminopropyldimethylbutoxysilane, 3-aminopropylmethyldibutoxysilane, dimethylaminomethyltrimethoxysilane, 2-dimethylaminoethyltrimethoxysilane, 3-dimethylaminopropyltrimethoxysilane, 4-dimethylaminobutyltrimethoxysilane, dimethylaminomethyldimethoxymethylsilane, 2-dimethylaminoethyldimethoxymethylsilane, 3-dimethylaminopropyldimethoxymethylsilane, 4-dimethylaminobutyldimethoxymethylsilane, dimethylaminomethyltriethoxysilane, 2-dimethylaminoethyltriethoxysilane, 3-dimethylaminopropyltriethoxysilane, 4-dimethylaminobutyltriethoxysilane, dimethylaminomethyldiethoxymethylsilane, 2-dimethylaminoethyldiethoxymethylsilane, 3-dimethylaminopropyldiethoxymethylsilane, 4-dimethylaminobutyldiethoxymethylsilane, diethylaminomethyltrimethoxysilane, 2-diethylaminoethyltrimethoxysilane, 3-diethylaminopropyltrimethoxysilane, 4-diethylaminobutyltrimethoxysilane, diethylaminomethyldimethoxymethylsilane, 2-diethylaminoethyldimethoxymethylsilane, 3-diethylaminopropyldimethoxymethylsilane, 4-diethylaminobutyldimethoxymethylsilane, diethylaminomethyltriethoxysilane, 2-diethylaminoethyltriethoxysilane, 3-diethylaminopropyltriethoxysilane, 4-diethylaminobutyltriethoxysilane, diethylaminomethyldiethoxymethylsilane, 2-diethylaminoethyldiethoxymethylsilane, 3-diethylaminopropyldiethoxymethylsilane, and 4-diethylaminobutyldiethoxymethylsilane. Particularly, 3-diethylaminopropyltrimethoxysilane is preferably used for a further improvement in terms of rolling resistance and wet grip performance. These compounds may be used alone, or two or more kinds thereof may be used in combination.

As the method for modifying BR or SBR using the compound (modifying agent) represented by formula (3), conventional methods such as methods disclosed for example in JP H06-53768 B and JP H06-57767 B may be used. In the case of modifying BR for instance, any method may be employed as long as butadiene rubber is brought into contact with the modifying agent. Examples thereof include a method in which butadiene rubber is formed by polymerization and a predetermined amount of the modifying agent is then added to the polymerized rubber solution; and a method in which the modifying agent is added to a solution of butadiene and a reaction is then carried out.

One preferred example of the modified SBR or modified BR (particularly, modified BR) which may be contained in the rubber composition of the present invention is a rubber with a tin atom content of 50 to 3000 ppm, a vinyl content of 5 to 50% by mass, and a molecular weight distribution (Mw/Mn) of 2 or less (tin-modified rubber). The tin-modified rubber effectively improves the filler dispersibility, and particularly promotes the dispersion of carbon black.

Examples of the tin-modified rubber include rubbers prepared by polymerizing 1,3-butadiene or polymerizing 1,3-butadiene with styrene by using a lithium initiator, and then adding a tin compound thereto. The terminal carbon of the tin-modified rubber molecule is preferably bonded to a tin atom.

Examples of the lithium initiator include lithium compounds such as alkyllithium, aryllithium, allyllithium, vinyllithium, organotinlithium, and organonitrogenlithium compounds. Use of the lithium compound enables easy production of a tin-modified rubber with a high vinyl content and a low cis content.

Examples of the tin compound include: tin tetrachloride, butyltin trichloride, dibutyltin dichloride, dioctyltin dichloride, tributyltin chloride, triphenyltin chloride, diphenyldibutyltin, triphenyltin ethoxide, diphenyldimethyltin, ditolyltin chloride, diphenyltin dioctanoate, divinyldiethyltin, tetrabenzyltin, dibutyltin distearate, tetraallyltin, and p-tributyltin styrene. These may be used alone, or two or more kinds thereof may be used in combination.

The tin atom content in 100% by mass of the tin-modified rubber is 50 ppm or more, preferably 60 ppm or more, and more preferably 100 ppm or more. If the tin atom content is less than 50 ppm, the effect of improving the filler

dispersibility tends to be small and the tan δ tends to increase (the performance in terms of rolling resistance tends to be poor). The tin atom content in the tin-modified rubber is 3000 ppm or less, preferably 2500 ppm or less, more preferably 1500 ppm or less, and still more preferably 500 ppm or less. If the tin atom content exceeds 3000 ppm, the extrusion processability of the kneaded mixture tends to be poor.

The molecular weight distribution (Mw/Mn) of the tin-modified rubber is 2 or less, preferably 1.8 or less, and more preferably 1. 5 or less. If the Mw/Mn exceeds 2, the effect of improving the filler dispersibility tends to be small and the tan δ tends to increase (the performance in terms of rolling resistance tends to be poor).

The number average molecular weight (Mn) and the weight average molecular weight (Mw) used herein are measured with a gel permeation chromatograph (GPC) (GPC-8000 series produced by Tosoh Corporation, detector: differential refractometer, column: TSKGEL SUPERMULTIPORE HZ-M produced by Tosoh Corporation) and calibrated with polystyrene standards.

One preferred example of the modified SBR or modified BR (particularly, modified BR) which may be contained in the rubber composition of the present invention is a rubber having a structural unit derived from a nitrogen-containing compound, in the main chain (main-chain-modified rubber). The main-chain-modified rubber can improve the filler dispersibility because the structural unit derived from a nitrogen-containing compound can be firmly bonded to filler. The S-modified rubber and the tin-modified rubber each preferably have a structural unit derived from a nitrogen-containing compound, in the main chain. Such a rubber has a structure in which the main chain and the terminal are modified, and is therefore easily bonded to filler, thereby further improving the filler dispersibility.

Examples of the nitrogen-containing compound include 3- or 4-(2-dimethylaminoethyl)styrene, 3- or 4-(2-pyrrolidinoethyl)styrene, 3- or 4-(2-piperidinoethyl)styrene, 3- or 4-(2-hexamethyleneiminoethyl)styrene, 3- or 4-(2-morpholinoethyl)styrene, and 3- or 4-(2-thiazolidinoethyl)styrene. These may be used alone, or two or more kinds thereof may be used in combination. Particularly, 3- or 4-(2-pyrrolidinoethyl)styrene is preferred because the filler dispersibility is more improved.

The weight average molecular weight (Mw) of the main-chain-modified rubber is preferably $1.0 \times 10^5$ or more, and more preferably $2.0 \times 10^5$ or more. If the Mw is less than $1.0 \times 10^5$, the performances in terms of rolling resistance and abrasion resistance, tend to be poor. The Mw is preferably $2.0 \times 10^6$ or less, and more preferably $1.5 \times 10^6$ or less. If the Mw exceeds $2.0 \times 10^6$, the processability tends to decrease.

As the main-chain-modified rubber, copolymers obtained by copolymerizing a nitrogen-containing compound, butadiene (1,3-butadiene), and if necessary a conjugated diene compound other than butadiene, and an aromatic vinyl compound may be used.

Examples of the method for producing such a copolymer include, but not particularly limited to, usual methods such as solution polymerization. For example, in the solution polymerization, a desired copolymer can be produced by anionic polymerization of a nitrogen-containing compound with butadiene, and if necessary a conjugated diene compound other than butadiene, and an aromatic vinyl polymer in the presence of a lithium compound as a polymerization initiator. Further, the compound represented by formula (3) or the tin compound may be added to the resulting copolymer to produce a rubber in which the main chain and the terminal are modified.

The amount of the nitrogen-containing compound (nitrogen-containing compound-derived monomer) based on 100% by mass of the main-chain-modified rubber is preferably 0.05% by mass or more, and more preferably 0.1% by mass or more. If the amount is less than 0. 05% by mass, the filler dispersibility may not be sufficiently improved. The amount is preferably 30% by mass or less, and more preferably 20% by mass or less. If the amount exceeds 30% by mass, effects proportionate to a cost increase tend not to be provided.

The amount of modified SBR in 100% by mass of the rubber component is preferably 1% by mass or more, more preferably 5% by mass or more, still more preferably 10% by mass or more, particularly preferably 25% by mass or more, and most preferably 40% by mass or more. If the amount of modified SBR is less than 1% by mass, an improvement in silica dispersibility and a reduction in rolling resistance due to the modification may not be sufficiently achieved. The amount of modified SBR may be 100% by mass, and is preferably 80% by mass or less, more preferably 70% by mass or less, and still more preferably 60% by mass or less. If the amount exceeds 80% by mass, the relative proportion of another rubber such as NR or BR is excessively reduced, which may cause reduction in abrasion resistance and crack resistance, and in some cases, reduction in processability.

The amount of modified BR in 100% by mass of the rubber component is preferably 1% by mass or more, more preferably 5% by mass or more, and still more preferably 10% by mass or more. If the amount of modified BR is less than 1% by mass, an improvement in silica dispersibility and a reduction in rolling resistance due to the modification, as well as the necessary levels of abrasion resistance and crack resistance may not be sufficiently achieved. The amount of modified BR is preferably 80% by mass or less, more preferably 70% by mass or less, and still more preferably 40% by mass or less. If the amount of modified BR exceeds 80% by mass, the relative proportion of NR or another rubber is excessively reduced, which may cause reduction in mechanical strength and processability. In addition, such a rubber composition when used for a cap tread may be difficult to provide sufficient wet grip performance.

The total amount of modified SBR and modified BR in 100% by mass of the rubber component is preferably

25% by mass or more, more preferably 50% by mass or more, and still more preferably 70% by mass or more. If the total amount is less than 25% by mass, the processability and the crack resistance tend to be poor. The total amount may be 100% by mass, and is preferably 90% by mass or less, more preferably 70% by mass or less, and still more preferably 50% by mass or less. If the total amount exceeds 90% by mass, the relative proportion of NR or another rubber is excessively reduced, which may cause reduction in mechanical strength and processability.

The present invention employs a first silica having a CTAB specific surface area of 180 $m^2/g$ or more, a BET specific surface area of 185 $m^2/g$ or more, and an aggregate size of 45 nm or more. Since the first silica having a small average primary particle size and a comparatively large aggregate size is dispersed well in rubber, excellent abrasion resistance, wet grip performance, and dry handling stability are achieved while the rolling resistance is reduced.

The CTAB (cetyltrimethylammonium bromide) specific surface area of the first silica is 180 $m^2/g$ or more, preferably 190 $m^2/g$ or more, more preferably 195 $m^2/g$ or more, and still more preferably 197 $m^2/g$ or more. If the CTAB specific surface area is less than 180 $m^2/g$, the mechanical strength and the abrasion resistance are less likely to be sufficiently improved. The CTAB specific surface area is preferably 600 $m^2/g$ or less, more preferably 300 $m^2/g$ or less, and still more preferably 250 $m^2/g$ or less. If the CTAB specific surface area exceeds 600 $m^2/g$, the silica may agglomerate due to its inferior dispersibility, and therefore the physical properties tend to be poor.

The CTAB specific surface area of silica is measured in accordance with ASTM D3765-92.

The BET specific surface area of the first silica is 185 $m^2/g$ or more, preferably 190 $m^2/g$ or more, more preferably 195 $m^2/g$ or more, and still more preferably 210 $m^2/g$ or more. If the BET specific surface area is less than 185 $m^2/g$, the mechanical strength and the abrasion resistance are less likely to be sufficiently improved. The BET specific surface area is preferably 600 $m^2/g$ or less, more preferably 300 $m^2/g$ or less, and still more preferably 260 $m^2/g$ or less. If the BET specific surface area exceeds 600 $m^2/g$, the silica may agglomerate due to its inferior dispersibility, and therefore the physical properties tend to be poor.

The BET specific surface area of silica is measured in accordance with ASTM D3037-81.

The aggregate size of the first silica is 45 nm or more, preferably 50 nm or more, more preferably 55 nm or more, and still more preferably 60 nm or more. The aggregate size is preferably 100 nm or less, more preferably 80 nm or less, still more preferably 70 nm or less, and particularly preferably 67 nm or less. The first silica having such an aggregate size can be dispersed well, and can also provide excellent reinforcement and excellent abrasion resistance.

The aggregate size is referred to as an aggregate diameter or a maximum frequency Stokes equivalent diameter, and means a particle size in the case where a silica aggregate formed by aggregation of a plurality of primary particles is regarded as one particle. The aggregate size may be measured, for example, with a disk centrifugal sedimentation granulometric analysis apparatus such as BI-XDC (produced by Brookhaven Instruments Corporation).

More specifically, the aggregate size may be measured with BI-XDC by the following method.

A 50-mL tall beaker is charged with 3.2 g of silica and 40 mL of deionized water, and the beaker containing the silica suspension is placed into a crystallizer filled with ice. In the beaker, the suspension is deagglomerated with an ultrasonic probe (1500-W 1.9-cm VIBRACELL ultrasonic probe (produced by Bioblock, used at 60% of the maximum power output)) for 8 minutes to prepare a sample. Then, 15 mL of the sample is introduced into a disk, stirred, and measured under the conditions of a fixed mode, an analysis time of 120 minutes, and a density of 2.1.

In the apparatus recorder, the values of the diameters passing at 16% by mass, 50% by mass (or median) and 84% by mass and the value of the Mode are recorded (the derivative of the cumulative granulometric curve gives a frequency curve, the abscissa of the maximum of which is known as the "Mode").

By the disk centrifugal sedimentation granulometric analysis method, an average size by weight (aggregate size) of the particles (i.e. aggregates), marked $D_w$, can be measured after the silica is dispersed in water by ultrasonic deagglomeration. After analysis (sedimentation for 120 minutes), the particle size distribution by weight is calculated by the granulometric analysis apparatus. The average size by weight of the particles, marked $D_w$, is calculated by the following formula:

$$\log D_w = \sum_{1}^{n} m_i \log D_i / \sum_{1}^{n} m_i$$

(In the formula, $m_i$ is the total mass of the particles in the class of $D_i$).

The average primary particle size of the first silica is preferably 25 nm or less, more preferably 22 nm or less, still more preferably 17 nm or less, and particularly preferably 14 nm or less. The lower limit of the average primary particle size is not particularly limited, and is preferably 3 nm or more, more preferably 5 nm or more, and still more preferably 7 nm or more. In spite of having such a small average primary particle size, the first silica has the above-described aggregate size, and therefore has a structure like that of carbon black. Accordingly, the silica dispersibility is

more improved, and thereby the reinforcement and the abrasion resistance are further improved.

The average primary particle size of silica may be determined by observing the silica with a transmission or scanning electron microscope, measuring the sizes of 400 or more primary particles of the silica observed in the visual field, and averaging the sizes of the 400 or more primary particles.

The D50 of the first silica is preferably 7.0 μm or less, more preferably 5.5 μm or less, and still more preferably 4.5 μm or less. If the D50 exceeds 7.0 μm, the dispersion of the silica is rather poor. The D50 of the first silica is preferably 2. μm or more, more preferably 2.5 μm or more, and still more preferably 3.0 μm or more. If the D50 is less than 2.0 μm, the aggregate size also tends to be small, and the silica is less likely to be sufficiently dispersed as finely-divided silica.

The D50 as used herein is a median diameter of silica than which 50% by mass of the particles are smaller.

The proportion of the first silica whose particle size is larger than 18 μm is preferably 6% by mass or less, more preferably 4% by mass or less, and still more preferably 1.5% by mass or less. Thereby, the silica is dispersed well, and desired performances are achieved.

The D50 of silica and the proportion of silica having a specific particle size are determined by the following method.

The aggregation of aggregates is evaluated by granulometric measurement (by laser diffraction) carried out on a silica suspension previously deagglomerated by ultrasonication. In this method, the aptitude of the silica for deagglomeration is measured (deagglomeration of the silica particles of 0.1 to tens of microns). The ultrasonic deagglomeration is performed with a VIBRACELL sound wave generator (600 W, produced by Bioblock, used at 80% of the maximum power output) equipped with a probe having a diameter of 19 mm. The granulometric measurement is carried out by laser diffraction on a MALVERN Mastersizer 2000 granulometric analyzer.

More specifically, the measurement is carried out by the following method.

An amount of 1 g of silica is weighed in a pill box (6 cm in height and 4 cm in diameter), deionized water is added thereto to give a mass of 50 g, and thereby an aqueous suspension including 2% of silica (this suspension is homogenized by magnetic stirring for 2 minutes) is prepared. Subsequently, ultrasonic deagglomeration is performed for 420 seconds, all the homogenized suspension is introduced into the vessel of the granulometric analyzer, and thereafter granulometric measurement is performed.

The distribution width W of the pore volume of the first silica is preferably 0.3 or more, more preferably 0.7 or more, still more preferably 1.0 or more, particularly preferably 1.3 or more, and most preferably 1. 5 or more. The pore distribution width W is preferably 5.0 or less, more preferably 4. 0 or less, still more preferably 3. 0 or less, and particularly preferably 2.0 or less. Such broad pore distribution leads to an improvement in the silica dispersibility and provides desired performances.

The distribution width W of the pore volume of silica may be measured by the following method.

The pore volume of the first silica is measured by mercury porosimetry. A silica sample is pre-dried in an oven at 200°C for 2 hours. Subsequently, within five minutes after the sample is removed from the oven, the sample is placed in a test receptacle, and degassed under vacuum. The pore diameter (AUTOPORE III 9420, porosimeter for powder technology) is calculated by Washburn's formula with a contact angle of 140° and a surface tension y of 484 dynes/cm (or N/m).

The pore distribution width W may be determined from a pore distribution curve as in Fig. 1 shown by the function of pore diameter (nm) and pore volume (ml/g). More specifically, the diameter Xs (nm) that gives the peak value Ys (ml/g) of the pore volume is recorded, the straight line of Y = Ys/2 is drawn, and then the points a and b at which the straight line intersects the pore distribution curve are obtained. When the abscissas (nm) of the points a and b are Xa and Xb (Xa > Xb), respectively, the pore distribution width W is equivalent to (Xa - Xb)/Xs.

The diameter Xs (nm) that gives the peak value Ys of the pore volume in the pore distribution curve of the finely-divided silica is preferably 10 nm or more, more preferably 15 nm or more, still more preferably 18 nm or more, and particularly preferably 20 nm or more. The diameter Xs is preferably 60 nm or less, more preferably 35 nm or less, still more preferably 28 nm or less, and particularly preferably 25 nm or less. The diameter Xs in such a range corresponds to finely-divided silica excellent in dispersibility and reinforcement.

The present invention employs a second silica having a CTAB specific surface area of 95 $m^2/g$ or less and a BET specific surface area of 100 $m^2/g$ or less. The use of the second silica in combination with the first silica enables an improvement in the silica dispersibility, which leads to excellent performances in terms of all of reinforcement, abrasion resistance, mechanical strength, and rolling resistance. Further, the wet grip performance and dry handling stability can be improved.

The CTAB specific surface area of the second silica is preferably 10 $m^2/g$ or more, more preferably 20 $m^2/g$ or more, and still more preferably 30 $m^2/g$ or more. If the CTAB specific surface area is less than 10 $m^2/g$, the reinforcement may be so poor that the mechanical strength and abrasion resistance needed for a tire rubber composition may be less likely to be secured. The CTAB specific surface area is 95 $m^2/g$ or less, preferably 80 $m^2/g$ or less, more preferably 60 $m^2/g$ or less, and still more preferably 50 $m^2/g$ or less. If the CTAB specific surface area exceeds 95 $m^2/g$, the silica dispersibility may be poor, and therefore, a reduction in rolling resistance and improvements in reinforcement, mechanical

strength, and abrasion resistance may be less likely to be achieved at the same time.

The BET specific surface area of the second silica is preferably 10 $m^2/g$ or more, more preferably 20 $m^2/g$ or more, and still more preferably 30 $m^2/g$ or more. If the BET specific surface area is less than 10 $m^2/g$, the reinforcement is so poor that the mechanical strength and abrasion resistance needed for a tire rubber composition may be less likely to be secured. The BET specific surface area is 100 $m^2/g$ or less, preferably 85 $m^2/g$ or less, more preferably 60 $m^2/g$ or less, and still more preferably 50 $m^2/g$ or less. If the BET specific surface area exceeds 100 $m^2/g$, the silica dispersibility may be poor, and therefore, a reduction in rolling resistance and improvements in reinforcement, mechanical strength, and abrasion resistance may be less likely to be achieved at the same time.

The average primary particle size of the second silica is preferably 20 nm or more, more preferably 25 nm or more, still more preferably 30 nm or more, particularly preferably 35 nm or more, and most preferably 55 nm or more. The upper limit of the average primary particle size is not particularly limited, and is preferably 500 nm or less, more preferably 200 nm or less, still more preferably 100 nm or less, and particularly preferably 70 nm or less. The second silica having such an average primary particle size can reduce the rolling resistance, and at the same time, can improve reinforcement, mechanical strength, and abrasion resistance.

The amount of the first silica is preferably 5 parts by mass or more, more preferably 10 parts by mass or more, still more preferably 15 parts by mass or more, and particularly preferably 20 parts by mass or more, per 100 parts by mass of the rubber component. If the amount is less than 5 parts by mass, the reinforcement, mechanical strength, and abrasion resistance may not be sufficiently achieved. The amount of the first silica is preferably 150 parts by mass or less, more preferably 100 parts by mass or less, still more preferably 80 parts by mass or less, particularly preferably 60 parts by mass or less, and most preferably 40 parts by mass or less. If the amount exceeds 150 parts by mass, the processability may be poor, and good dispersibility may be less likely to be secured.

The amount of the second silica is preferably 5 parts by mass or more, more preferably 10 parts by mass or more, still more preferably 20 parts by mass or more, particularly preferably 30 parts by mass or more, and most preferably 45 parts by mass or more, per 100 parts by mass of the rubber component. If the amount is less than 5 parts by mass, the dispersibility may be less likely to be improved, and therefore, a reduction in rolling resistance and improvements in reinforcement, mechanical strength, and abrasion resistance may be less likely to be achieved at the same time. The amount of the second silica is preferably 150 parts by mass or less, more preferably 100 parts by mass or less, still more preferably 80 parts by mass or less, particularly preferably 60 parts by mass or less, and most preferably 45 parts by mass or less. If the amount exceeds 150 parts by mass, such a large amount of silica may make it difficult to process the composition, and the possible amount of the first silica is relatively decreased, which may be less likely to ensure reinforcement and mechanical strength.

In the rubber composition of the present invention, the total amount of the first silica and the second silica is preferably 20 parts by mass or more, more preferably 30 parts by mass or more, still more preferably 40 parts by mass or more, and most preferably 45 parts by mass or more, per 100 parts by mass of the rubber component. If the total amount is less than 20 parts by mass, the amount of carbon black needs to be increased, which is not preferred in terms of rolling resistance. The total amount is preferably 150 parts by mass or less, more preferably 100 parts by mass or less, and still more preferably 80 parts by mass or less. If the total amount exceeds 150 parts by mass, the total amount of the first silica, the second silica, and carbon black, which may be added in a minimum amount (about 10 parts by mass) for improving weather resistance (resistance to UV cracking) and coloring, exceeds 150 parts by mass, and therefore the performance in terms of rolling resistance tends to be poor, and such a large amount of filler may make it difficult to process the composition.

The rubber composition of the present invention contains carbon black. Examples of usable carbon black include, but not particularly limited to, GPF, FEF, HAF, ISAF, and SAF. The use of carbon black improves reinforcement, and also contributes to better weather resistance and crack resistance, coloring, and higher reinforcement, and if necessary, to enhanced conductivity for instance.

The nitrogen adsorption specific surface area ($N_2SA$) of carbon black is preferably 20 $m^2/g$ or more, more preferably 35 $m^2/g$ or more, still more preferably 70 $m^2/g$ or more, particularly preferably 100 $m^2/g$ or more, and most preferably 130 $m^2/g$ or more. If the $N_2SA$ is less than 20 $m^2/g$, sufficient reinforcement and conductivity may be less likely to be achieved. The nitrogen adsorption specific surface area of carbon black is preferably 1400 $m^2/g$ or less, and more preferably 200 $m^2/g$ or less. If the $N_2SA$ exceeds 1400 $m^2/g$, the carbon black may be less likely to be dispersed well.

The nitrogen adsorption specific surface area of carbon black is determined in accordance with the A method of JIS K6217.

The amount of carbon black is preferably 1 part by mass or more, and more preferably 3 parts by mass or more, per 100 parts by mass of the rubber component. If the amount of carbon black is less than 1 part by mass, the weather resistance (resistance to UV cracking) may not be sufficiently improved and the resulting tire may be insufficiently colored. The amount of carbon black is preferably 100 parts by mass or less, more preferably 50 parts by mass or less, still more preferably 30 parts by mass or less, particularly preferably 10 parts by mass or less, and most preferably 7 parts by mass or less. If the amount of carbon black exceeds 100 parts by mass, the performance in terms of rolling

resistance tends to be poor.

The total amount of silica (the first silica and the second silica) and carbon black is preferably 20 parts by mass or more, more preferably 40 parts by mass or more, and still more preferably 55 parts by mass or more, per 100 parts by mass of the rubber component. If the total amount is less than 20 parts by mass, sufficient reinforcement may not be achieved and the necessary mechanical properties may be less likely to be achieved. The total amount is preferably 150 parts by mass or less, more preferably 100 parts by mass or less, and still more preferably 80 parts by mass or less. If the total amount exceeds 150 parts by mass, the dispersibility and processability tend to be poor, and the performance in terms of rolling resistance tends to be poor.

In the present invention, a mercapto group-containing silane coupling agent may preferably be used. Since silica (particularly the first silica) is less likely to be dispersed in NR and BR which have low polarity, coupling agents (for example, bis(3-triethoxysilylpropyl)disulfide and bis(3-triethoxysilylpropyl)tetrasulfide) generally used in the tire industry tend not to sufficiently improve the silica dispersibility in a rubber composition containing a large amount of NR and/or BR. On the other hand, mercapto group-containing coupling agents, which have high reactivity, can improve the silica dispersibility even in a rubber composition containing a large amount of NR and/or BR. As a result, the abrasion resistance and mechanical strength can be improved and the rolling resistance can also be reduced. Thus, it is preferred to use a mercapto group-containing silane coupling agent in combination with NR and/or BR.

The mercapto group-containing silane coupling agent is highly reactive, and highly improves the silica dispersibility. However, this silane coupling agent has drawbacks in that the scorch time is likely to be reduced, and thereby the rubber composition is very likely to scorch upon final kneading and extrusion. In contrast, since the rubber composition of the present invention contains the first silica which retards curing, it is possible to solve the problem of the short scorch time caused by the mercapto group-containing silane coupling agent. Here, in order to increase the scorch time, the mercapto group-containing silane coupling agent is preferably used together with at least one selected from the group consisting of NR, BR, modified NR, modified BR, and modified SBR.

Examples of the mercapto group-containing silane coupling agent include, but not particularly limited to, 3-mercaptopropyltrimethoxysilane, 3-mercaptopropyltriethoxysilane, 2-mercaptoethyltrimethoxysilane, and 2-mercaptoethyltriethoxysilane.

Particularly, Si363 (produced by Degussa), NXT-Z45 (produced by Momentive Performance Materials), and other agents which have a protected mercapto group can be suitably used because they allow kneading of the rubber composition at high temperatures to improve the processability during kneading. More particularly, a silane coupling agent that is a copolymer comprising units A represented by the following formula (1) and units B represented by the following formula (2), in which the proportion of the units B is 1 to 70 mol% of the total molar amount of the units A and the units B, is suitably used.

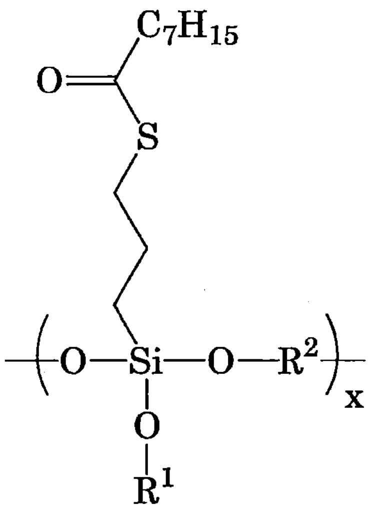
(1)

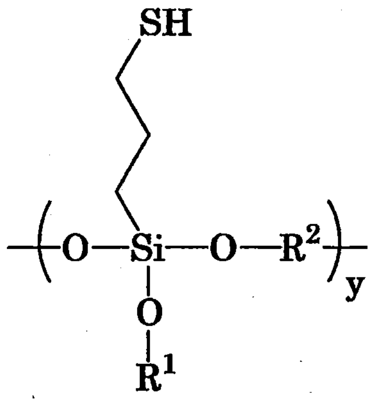

(2)

In the formulas, x is an integer of 0 or more; y is an integer of one or more; $R^1$ represents hydrogen, a halogen, a branched or unbranched C1-30 alkyl or alkylene group, a branched or unbranched C2-30 alkenyl or alkenylene group, a branched or unbranched C2-30 alkynyl or alkynylene group, or a group in which a hydrogen atom at the end of the alkyl or alkenyl group is replaced with a hydroxy or carboxyl group; $R^2$ represents hydrogen, a branched or unbranched C1-30 alkylene or alkyl group, a branched or unbranched C2-30 alkenylene or alkenyl group, or a branched or unbranched C2-30 alkynylene or alkynyl group; and $R^1$ and $R^2$ may form a ring structure together.

As described above, the mercapto group-containing silane coupling agent is disadvantageously likely to cause reduction in scorch time, resulting in rubber scorch. Accordingly, it has been difficult to use the mercapto group-containing silane coupling agent in a rubber composition that contains SBR which is more likely to scorch compared to NR or BR.

Meanwhile, in recent years, the modulus and hardness need to be increased in order to achieve both lower rolling resistance and good handling stability, and it is also desirable to prevent a change in hardness after many years of use. Consequently, the amount of vulcanization accelerator is often increased. In this case, however, the mercapto group-containing silane coupling agent, which is highly reactive, more easily causes rubber scorch, and is therefore more difficult to use.

On the other hand, in the silane coupling agent having the above-described structure, the molar ratio of the unit A and the unit B satisfies the above-described conditions. Thus, such a silane coupling agent suppresses an increase in viscosity upon processing compared to polysulfide silanes such as bis-(3-triethoxysilylpropyl)tetrasulfide. This is presumably for the following reason. Since the sulfide portion of the unit A is a C-S-C bond, the sulfide portion is thermally stable compared to tetrasulfide or disulfide. Accordingly, an increase in Mooney viscosity is small.

In the case where the molar ratio of the unit A and the unit B satisfies the conditions and x is one or more, the silane coupling agent suppresses a reduction in scorch time compared to mercaptosilanes such as 3-mercaptopropyltrimethoxysilane. This is presumably for the following reason. The unit B has a mercaptosilane structure, and the -SH group of the unit B is covered with the $-C_7H_{15}$ portion of the unit A. Accordingly, the -SH group is less likely to react with polymers, which is less likely to cause reduction in scorch time. Thus, the scorch time is less likely to be reduced, and the viscosity is less likely to increase.

In the case where the first silica, which retards curing, is used in combination with the silane coupling agent having the above structure, the scorch resistance with industrial applicability is securable even in a rubber composition that contains SBR which is more likely to scorch compared to NR or BR and also in a rubber composition that contains a comparatively large amount of a vulcanization accelerator. Presumably owing to such actions, good dispersibility of the first silica and good processability (e.g. scorch resistance) are achieved at the same time.

Examples of the halogen for $R^1$ include chlorine, bromine, and fluorine.

Examples of the branched or unbranched C1-30 alkyl group for $R^1$ or $R^2$ include a methyl group, an ethyl group, an n-propyl group, an isopropyl group, an n-butyl group, an iso-butyl group, a sec-butyl group, a tert-butyl group, a pentyl group, a hexyl group, a heptyl group, a 2-ethylhexyl group, an octyl group, a nonyl group, and a decyl group. The number of carbons of the alkyl group is preferably 1 to 12.

Examples of the branched or unbranched C1-30 alkylene group for $R^1$ or $R^2$ include an ethylene group, a propylene group, a butylene group, a pentylene group, a hexylene group, a heptylene group, an octylene group, a nonylene group, a decylene group, an undecylene group, a dodecylene group, a tridecylene group, a tetradecylene group, a pentadecylene group, a hexadecylene group, a heptadecylene group, and an octadecylene group. The number of carbons of the alkylene group is preferably 1 to 12.

Examples of the branched or unbranched C2-30 alkenyl group for $R^1$ or $R^2$ include a vinyl group, a 1-propenyl group, a 2-propenyl group, a 1-butenyl group, a 2-butenyl group, a 1-pentenyl group, a 2-pentenyl group, a 1-hexenyl group, a 2-hexenyl group, and a 1-octenyl group. The number of carbons of the alkenyl group is preferably 2 to 12.

Examples of the branched or unbranched C2-30 alkenylene group for $R^1$ or $R^2$ include a vinylene group, a 1-propenylene group, a 2-propenylene group, a 1-butenylene group, a 2-butenylene group, a 1-pentenylene group, a 2-pentenylene group, a 1-hexenylene group, a 2-hexenylene group, and a 1-octenylene group. The number of carbons of the alkenylene group is preferably 2 to 12.

Examples of the branched or unbranched C2-30 alkynyl group for $R^1$ or $R^2$ include an ethynyl group, a propynyl group, a butynyl group, a pentynyl group, a hexynyl group, a heptynyl group, an octynyl group, a nonynyl group, a decynyl group, an undecynyl group, and a dodecynyl group. The number of carbons of the alkynyl group is preferably 2 to 12.

Examples of the branched or unbranched C2-30 alkynylene group for $R^1$ or $R^2$ include an ethynylene group, a propynylene group, a butynylene group, a pentynylene group, a hexynylene group, a heptynylene group, an octynylene group, a nonynylene group, a decynylene group, an undecynylene group, and a dodecynylene group. The number of carbons of the alkynylene group is preferably 2 to 12.

In the silane coupling agent having the above structure, the total number of repetition (x + y) of the number of repetition (x) of the unit A and the number of repetition (y) of the unit B is preferably 3 to 300, and x is preferably 1 or more. In this case, the $-C_7H_{15}$ of the unit A covers the mercaptosilane of the unit B. Accordingly, the reduction in scorch time can be suppressed and good reactivity of the silane coupling agent with silica and the rubber component can be secured.

Examples of the silane coupling agent having the above structure include NXT-Z30, NXT-Z45, and NXT-Z60, all produced by Momentive Performance Materials. These may be used alone, or two or more kinds thereof may be used in combination.

The amount of the mercapto group-containing silane coupling agent is preferably 0.5 parts by mass or more, more preferably 1. 5 parts by mass or more, and still more preferably 2.5 parts by mass or more, per 100 parts by mass of silica (the total amount of the first silica and the second silica). If the amount is less than 0.5 parts by mass, the first silica in accordance with the present invention may be less likely to be dispersed well. The amount is preferably 20 parts by mass or less, more preferably 15 parts by mass or less, and still more preferably 10 parts by mass or less. If the amount exceeds 20 parts by mass, the dispersibility of the first silica is not improved any more with such increase in the added amount, and the costs increase. In addition, the scorch time tends to be reduced, and the processability in kneading and extrusion tends to be poor.

The rubber composition may optionally contain compounding ingredients conventionally used in the rubber industry, in addition to the above-described ingredients. Examples of the compounding ingredients include fillers such as clay, oils or plasticizers, antioxidants, age resistors, zinc oxide, vulcanizing agents such as sulfur and sulfur-containing compounds, and vulcanization accelerators.

The rubber composition of the present invention preferably contains a resin for improving wet grip performance. Examples of the resin include coumarone resin and coumarone-indene resin, and further include homopolymers and copolymers of styrene, $\alpha$-methylstyrene, vinyltoluene or the like. Particularly, copolymers of $\alpha$-methylstyrene and styrene are preferred. The use of such a copolymer greatly improves wet grip performance while maintaining good performances in terms of rolling resistance and abrasion resistance.

The softening point of the resin is preferably 100°C or less, more preferably 95°C or less, and still more preferably 92°C or less. If the softening point exceeds 100°C, the abrasion resistance and the grip performance at low temperatures tend to be poor. The softening point is preferably 30°C or more, more preferably 60°C or more, and still more preferably 75°C or more. If the softening point is less than 30°C, the wet grip performance tends to be poor.

The softening point used herein refers to a temperature at which a ball drops in measurement with a ring and ball softening point measuring apparatus according to JIS K6220.

The number average molecular weight (Mn) of the resin is preferably 300 or more, and more preferably 500 or more. If the Mn is less than 300, the wet grip performance is less likely to be sufficiently improved. The number average molecular weight is preferably 3000 or less, more preferably 1500 or less, and still more preferably 1000 or less. If the Mn exceeds 3000, the performance in terms of rolling resistance tends to be poor.

The weight average molecular weight (Mw) of the resin is preferably 500 or more, more preferably 800 or more, and still more preferably 1000 or more. If the Mw is less than 500, the wet grip performance is less likely to be sufficiently improved. The weight average molecular weight is preferably 3000 or less, more preferably 2000 or less, and still more preferably 1000 or less. If the Mw exceeds 3000, the performance in terms of rolling resistance tends to be poor.

The amount of the resin is preferably 1 part by mass or more, more preferably 3 parts by mass or more, and still more preferably 4 parts by mass or more, per 100 parts by mass of the rubber component. If the amount is less than 1 part by mass, the wet grip performance is less likely to be sufficiently improved. The amount of the resin is preferably 20 parts by mass or less, more preferably 10 parts by mass or less, and still more preferably 8 parts by mass or less. If the amount exceeds 20 parts by mass, the performances in terms of rolling resistance and abrasion resistance tend to be poor.

The rubber composition of the present invention is produced by a usual method. More specifically, the rubber composition can be produced, for example, by a method including kneading the above-described ingredients with a kneading apparatus such as a Banbury mixer, a kneader, or an open roll mill, and then vulcanizing the resulting mixture.

The rubber kneading preferably includes: base kneading in which ingredients other than a vulcanizing agent and a vulcanization accelerator are kneaded; and final kneading in which the kneaded mixture formed through the base kneading, a vulcanizing agent, and a vulcanization accelerator are kneaded.

In the base kneading, the rubber composition having a temperature of 10 to 100°C at the start of kneading is preferably kneaded to a temperature (outlet temperature of the rubber composition from a kneading apparatus) of preferably 130°C or higher, more preferably 140°C or higher, still more preferably 150°C or higher, particularly preferably 155°C or higher, and most preferably 160°C or higher. If the outlet temperature is lower than 130°C, the silane coupling agent may not sufficiently react, the silica dispersibility may decrease, and the desired effects may not be achieved. The outlet temperature of the rubber composition from the kneading apparatus is preferably 200°C or lower, more preferably 180°C or lower, and still more preferably 175°C or lower. If the outlet temperature exceeds 200°C, the rubber composition may be degraded.

The outlet temperature of a rubber composition from a kneading apparatus in the base kneading is usually 130 to 155°C. In the case of kneading a rubber composition containing a polysulfide silane such as bis-(3-triethoxysilylpropyl)tetrasulfide, an increase in the outlet temperature of the rubber composition may cause a great reduction in scorch time and therefore rubber scorch. In such a case, if the silane coupling agent that is a copolymer comprising the units A represented by formula (1) and the units B represented by formula (2), in which the proportion of the units B is 1 to 70 mol% of the total molar amount of the units A and the units B, is used together with the first silica and the second silica, the reduction in scorch time can be suppressed even if the outlet temperature of the rubber composition is increased; and at the same time, the mechanical strength and abrasion resistance of the rubber composition can be improved, and the rolling resistance can be reduced.

The rubber composition of the present invention may be used for various tire components, and is preferably used especially for tire components that may contain silica and that need excellent mechanical strength (breaking energy) or abrasion resistance. Examples of such components include a tread (a cap tread and a base tread), a clinch, a sidewall, and a bead apex. A preferred component may be a cap tread, a clinch, a sidewall, or a base tread. A particularly preferred component may be a cap tread or a clinch.

The pneumatic tire of the present invention is produced by a usual method using the above rubber composition.

More specifically, an unvulcanized rubber composition containing the above-described ingredients is extruded and processed into the shape of a tire component such as a tread, and then built into an unvulcanized tire with other tire components in a usual manner on a tire building machine. Then, the unvulcanized tire is heated and pressurized in a vulcanizer to produce the pneumatic tire of the present invention.

The application of the pneumatic tire produced using the rubber composition of the present invention is not particularly limited, and the pneumatic tire is suitable for use as tires such as tires for passenger vehicles, and tires for trucks and buses.

## EXAMPLES

The present invention is more specifically described based on examples, and the present invention is not limited to the examples.

In the following, the chemical agents used in Examples and Comparative Examples are listed.

SBR 1: Nipol NS116R produced by Zeon Corporation (modified S-SBR, styrene content: 21% by mass, cis content: 9.5% by mass, vinyl content: 65% by mass, Tg: -25°C, modified by N-methylpyrrolidone at one end)

SBR 2: Nipol 1502 produced by Zeon Corporation (non-modified E-SBR, styrene content: 23.5% by mass, Tg: -25°C)

BR1: BR150B produced by Ube Industries, Ltd. (non-modified BR, cis content: 97% by mass, $ML_{1+4}$ (100°C): 40, viscosity of 5% solution in toluene at 25°C: 48 cps, Mw/Mn: 3.3, Tg: -104°C)

BR2: end-modified BR produced by Sumitomo Chemical Co., Ltd. (cis content: 27% by mass, vinyl content: 15% by mass, modified by a compound represented by the formula (3) in which $R^1$, $R^2$, $R^3$=$-OCH_3$; $R^4$, $R^5$=$-CH_2CH_3$; and n=3)

BR3: BR1250 produced by Zeon Corporation (polymerized using lithium as an initiator, cis content: 45% by mass, vinyl content: 10 to 13% by mass, Mw/Mn: 1.5, tin-modified, tin atom content: 250 ppm)

BR4 : main-chain- and end-modified BR (produced by the following production method, vinyl content: 18% by mass, Mw: 300,000, the amount of nitrogen-containing compound-derived monomer: 2% by mass)

NR: RSS#3 (Tg: -60°C)

Silica 1: Ultrasil 360 produced by Degussa (CTAB specific surface area: 50 $m^2/g$, BET specific surface area: 50 $m^2/g$, average primary particle size: 38 nm, pH: 9.0)

Silica 2: Zeosil 1115MP produced by Rhodia (CTAB specific surface area: 110 $m^2/g$, BET specific surface area: 115 $m^2/g$, average primary particle size: 25 nm, pH: 6.5, aggregate size: 92 nm, pore distribution width W: 0.63, diameter Xs that gives pore volume peak in pore distribution curve: 60.3 nm)

Silica 3: Zeosil HRS 1200MP produced by Rhodia (CTAB specific surface area: 195 $m^2/g$, BET specific surface area: 200 $m^2/g$, average primary particle size: 15 nm, pH: 6.5, aggregate size: 40 nm, D50: 6.5 μm, proportion of particles exceeding 18 μm in size: 5.0% by mass, pore distribution width W: 0.40, diameter Xs that gives pore volume peak in pore distribution curve: 18.8 nm)
Silica 4: Zeosil Premium 200MP produced by Rhodia (CTAB specific surface area: 200 $m^2/g$, BET specific surface area: 220 $m^2/g$, average primary particle size: 10 nm, pH: 6.5, aggregate size: 65 nm, D50: 4.2 μm, proportion of particles exceeding 18 μm in size: 1.0% by mass, pore distribution width W: 1.57, diameter Xs that gives pore volume peak in pore distribution curve: 21.9 nm)
Silica 5: Nipsil E-743 produced by Tosoh Silica Corporation (CTAB specific surface area: 40 $m^2/g$, BET specific surface area: 40 $m^2/g$, average primary particle size: 67 nm, pH: 7.8)
Carbon black: SHOBLACK N110 produced by Cabot Japan K.K. ($N_2SA$: 143 $m^2/g$)
Silane coupling agent 1: Si69 (bis(3-triethoxysilylpropyl) tetrasulfide) produced by Degussa
Silane coupling agent 2: NXT-Z15 produced by Momentive Performance Materials (copolymer of unit A and unit B (in the formulas (1) and (2), unit A: 85 mol%, unit B: 15 mol%))
Silane coupling agent 3: NXT-Z45 produced by Momentive Performance Materials (copolymer of unit A and unit B (in the formulas (1) and (2), unit A: 55 mol%, unit B: 45 mol%))
Silane coupling agent 4: NXT-Z60 produced by Momentive Performance Materials (copolymer of unit A and unit B (in the formulas (1) and (2), unit A: 40 mol%, unit B: 60 mol%))
Silane coupling agent 5: NXT-Z100 produced by Momentive Performance Materials (homopolymer of unit B (in the formulas (1) and (2), unit A: 0 mol%, unit B: 100 mol%))
Mineral oil: PS-32 produced by Idemitsu Kosan Co., Ltd. (paraffinic process oil)
Resin: RESIN 2336 Hydrocarbon Resin produced by Eastman Chemical Company (copolymer of α-methylstyrene and styrene, softening point: 82 to 88°C, Mn: 600, Mw: 1250)
Stearic Acid: KIRI produced by NOF Corporation
Zinc oxide: Zinc oxide #2 produced by MITSUI MINING & SMELTING CO., LTD.
Age resistor: Nocrac 6C (N-(1,3-dimethylbutyl)-N'-phenyl-p-phenylenediamine) produced by Ouchi Shinko Chemical Industrial Co., Ltd.
Wax: Sunnoc Wax produced by Ouchi Shinko Chemical Industrial Co., Ltd.
Sulfur: sulfur powder produced by Tsurumi Chemical industry Co., Ltd.
Vulcanization accelerator TBBS: Nocceler NS (N-tert-butyl-2-benzothiazolylsulfenamide) produced by Ouchi Shinko Chemical Industrial Co., Ltd.
Vulcanization accelerator DPG: NOCCELER D (N,N'-diphenylguanidine) produced by Ouchi Shinko Chemical Industrial Co., Ltd.

Of the silica 1 to 5, the silica 4 corresponds to the first silica in accordance with the present invention, and the silica 1 and 5 correspond to the second silica in accordance with the present invention.
In the following, the chemical agents used for the production of BR4 are listed.

Cyclohexane: cyclohexane produced by Kanto Chemical Co., Inc.
Pyrrolidine: pyrrolidine produced by Kanto Chemical Co., Inc.
Divinylbenzene: divinylbenzene produced by Sigma-Aldrich Japan K.K.
Isopropanol: isopropanol produced by Kanto Chemical Co., Inc.
Cyclohexane: cyclohexane produced by Kanto Chemical Co., Inc.
Butadiene: 1,3-butadiene produced by Takachiho Chemical Industrial Co., Ltd.
Tetramethylethylenediamine: N,N,N',N'-tetramethylethylenediamine produced by Kanto Chemical Co., Inc.
1.6 M Solution of n-butyllithium in hexane: 1.6 M solution of n-butyllithium in hexane produced by Kanto Chemical Co., Inc.
Modifying agent: 3-(N,N-dimethylaminopropyl) trimethoxysilane produced by AZmax Co. Ltd.
Isopropanol: isopropanol produced by Kanto Chemical Co., Inc.

(Example of method for producing BR4)

A 100-ml vessel was sufficiently purged with nitrogen, and charged with 50 ml of cyclohexane, 4.1 ml (3.6 g) of pyrrolidine, and 6.5 g of divinylbenzene. Thereto was further added 0.7 ml of a 1.6 M solution of n-butyllithium in hexane at 0°C, and the mixture was stirred. After 1 hour, isopropanol was added to the mixture to terminate the reaction, and then the resultant mixture was subjected to extraction and purification to give monomer (1) (nitrogen-containing compound-derived monomer).
Next, a 1000-ml pressure-resistant vessel was sufficiently purged with nitrogen, and charged with 600 ml of

cyclohexane, 71.0 ml (41.0 g) of butadiene, 0.29 g of monomer (1), and 0.11 ml of tetramethylethylenediamine. Thereto was further added 0.2 ml of a 1.6 M solution of n-butyllithium in hexane at 40°C, and the mixture was stirred. After 3 hours, 0.5 ml (0.49 g) of 3-(N,N-dimethylaminopropyl) trimethoxysilane (modifying agent) was added, and the mixture was stirred. After 1 hour, 3 ml of isopropanol was added to terminate the polymerization. The reaction mixture was mixed with 1 g of 2,6-tert-butyl-p-cresol, and then was re-precipitated with methanol and heat-dried. Thus, copolymer (BR4) was obtained.

(Measurement of weight average molecular weight (Mw))

The weight average molecular weight (Mw) of the copolymer was measured using a GPC-8000 series device (produced by TOSOH CORPORATION) and a differential refractometer as a detector, and the measured molecular weights were calibrated relative to polystyrene standards.

(Measurement of amount of nitrogen-containing compound-derived monomer in copolymer)

The amount of a nitrogen-containing compound-derived monomer in a copolymer was measured using an apparatus of JNM-ECA series (produced by JEOL Ltd.).

Examples 1 to 17 and Comparative Examples 1 to 12

The chemical agents were put into a Banbury mixer in amounts according to the formulation amounts shown in Process 1 in Tables 1 to 3. They were kneaded for 5 minutes so as to raise the outlet temperature to about 150°C.

In Examples 4, 5, and 8, however, they were kneaded for 5 minutes so as to raise the outlet temperature to about 165°C.

Thereafter, the sulfur and vulcanization accelerator (s) in amounts shown in Process 2 in Tables 1 to 3 were added to the resultant kneaded mixture of Process 1 and kneaded using an open roll mill at about 80°C for 3 minutes. Thus, an unvulcanized rubber composition was produced.

Then, a portion of the resulting unvulcanized rubber composition was press-vulcanized at 170°C for 15 minutes to give a vulcanized rubber sheet.

Also, another portion of the unvulcanized rubber composition was molded into a tread shape and assembled with other tire components. Then, the assembly was vulcanized at 170°C for 15 minutes. Thus, a test tire was produced.

The resulting unvulcanized rubber compositions, vulcanized rubber sheets, and test tires were evaluated as follows. Tables 1 to 3 show the test results.

(1) Breaking energy index

The tensile strength and the elongation at break of each vulcanized rubber sheet were measured in accordance with JIS K 6251 "Rubber, vulcanized or thermoplastic - Determination of tensile stress-strain properties." Further, the breaking energy was calculated by the formula: (tensile strength x elongation at break)/2. The breaking energy index of the reference comparative example was regarded as 100, and the breaking energy of each formulation was expressed as an index by the following formula. The larger the index is, the higher the mechanical strength is.

(Breaking energy index) = (Breaking energy of each formulation)/(Breaking energy of reference comparative example) x 100

It is noted that the reference comparative example is: Comparative Example 1 with regard to Examples 1 to 6 and Comparative Examples 1 to 5; Comparative Example 6 with regard to Examples 7 to 9 and Comparative Examples 6 and 7; Comparative Example 8 with regard to Examples 10 to 17 and Comparative Examples 8 to 12. The same applies to the following evaluations.

(2) Abrasion resistance test (abrasion test)

Each set of produced test tires was put on a vehicle, and the decrease in the depth of tire grooves was measured after 8000 km drive in an urban area. Then, the running distance that decreased the depth of tire grooves by 1 mm was calculated. The abrasion resistance index of the reference comparative example was regarded as 100, and the running

distance of each formulation was expressed as an index by the following formula. The larger the index is, the better the abrasion resistance is.

$$(\text{Abrasion resistance index}) = (\text{Running distance of each formulation})/(\text{Running distance of reference comparative example}) \times 100$$

(3) Rolling resistance test

A vulcanized rubber sheet (2 mm x 130 mm x 130 mm) was prepared, and a test piece for measurement was cut out from the vulcanized rubber sheet. Then, the tanδ of each test piece was determined with a viscoelasticity spectrometer VES (produced by Iwamoto Seisakusho Co., Ltd.) under the following conditions: a temperature of 50°C; an initial strain of 10%; a dynamic strain of 2%; and a frequency of 10 Hz. The rolling resistance index of the reference comparative example was regarded as 100, and the tanδ of each formulation was expressed as an index by the following formula. The smaller the index is, the smaller the rolling resistance is, that is, the better the performance in terms of rolling resistance.

$$(\text{Rolling resistance index}) = (\text{Tan}\delta \text{ of each formulation})/(\text{Tan}\delta \text{ of reference comparative example}) \times 100$$

(4) Silica dispersion index

A vulcanized rubber sheet (2 mm x 130 mm x 130 mm) was prepared, and a test piece for measurement was cut out from the vulcanized rubber sheet. The number of silica agglomerates in each test piece was counted and the dispersion ratio (%) was calculated in accordance with JIS K 6812 "Method for the assessment of the degree of pigment or carbon black dispersion in polyolefin pipes, fittings and compounds." The silica dispersion index of the reference comparative example was regarded as 100, and the silica dispersion ratio of each formulation was expressed as an index by the following formula. The larger the index is, the better the silica is dispersed, that is, the better the silica dispersibility.

$$(\text{Silica dispersion index}) = (\text{Silica dispersion ratio of each formulation})/(\text{Silica dispersion ratio of reference comparative example}) \times 100$$

(5) Wet grip performance index

The grip performance was evaluated based on the braking performance determined in the evaluation for anti-lock braking system (ABS). More specifically, each set of test tires was put on a 1800-cc passenger vehicle equipped with an ABS. Then, an actual vehicle running test was performed on an asphalt road surface (wet road surface, skid number: about 50), and the deceleration was determined which, as used herein, was a distance needed for a vehicle to stop after the brakes were applied at 100 km/h. The wet grip performance index of the reference comparative example was regarded as 100, and the deceleration of each formulation was expressed as an index by the following formula. The larger the index is, the better the braking performance is, that is, the better the wet grip performance.

$$(\text{Wet grip performance index}) = (\text{Deceleration of reference comparative example})/(\text{Deceleration of each formulation}) \times 100$$

(6) Dry handling stability index

Sensory evaluation by a test driver was carried out using the above-described vehicle (passenger vehicle used in the evaluation of wet grip performance) on starting, accelerating, and stopping on a dry road surface. The sensory evaluation was as follows. The performance of the reference comparative example was regarded as 100, and in the case where the test driver found that the performance of a tire was obviously improved compared to that of the reference comparative example, the performance of that tire was evaluated as 120; in the case where the test driver found that the performance of a tire was at a high level that had never been achieved with tires of the same class and the same size, the performance of that tire was evaluated as 140.

(7) Processability index

The unvulcanized rubber compositions of Examples 1 to 6 and Comparative Examples 1 to 5 were examined for $ML_{1+4}$ at 130. 0 ± 0.5°C in accordance with the Mooney scorch test in JIS K6300 "Physical Testing Methods For Unvulcanized Rubber." The processability index of the reference comparative example was regarded as 100, and the $ML_{1+4}$ of each formulation was expressed as an index by the following formula. The larger the index is, the poorer the processability may be. Particularly in the present evaluation, if the processability index is 130 or more, the processability is poor in kneading and extrusion.

$$(\text{Processability index}) = (ML_{1+4} \text{ of each formulation})/(ML_{1+4} \text{ of reference comparative example}) \times 100$$

[Table 1]

| | | | Example | | | | | | Comparative Example | | | | |
|---|---|---|---|---|---|---|---|---|---|---|---|---|---|
| | | | 1 | 2 | 3 | 4 | 5 | 6 | 1 | 2 | 3 | 4 | 5 |
| Formulation (part by mass) | Process 1 | SBR1 | 50 | 50 | 50 | 50 | 50 | 50 | 50 | 50 | 50 | 50 | 50 |
| | | SBR2 | — | — | — | — | — | — | — | — | — | — | — |
| | | BR1 | 30 | 30 | 30 | 30 | 30 | 30 | 30 | 30 | 30 | 30 | 30 |
| | | BR2 | — | — | — | — | — | — | — | — | — | — | — |
| | | BR3 | — | — | — | — | — | — | — | — | — | — | — |
| | | BR4 | — | — | — | — | — | — | — | — | — | — | — |
| | | NR | 20 | 20 | 20 | 20 | 20 | 20 | 20 | 20 | 20 | 20 | 20 |
| | | Silica 1 | 50 | 37.5 | 25 | 37.5 | 37.5 | — | — | 75 | 37.5 | — | — |
| | | Silica 2 | — | — | — | — | — | — | 75 | — | — | 37.5 | — |
| | | Silica 3 | — | — | — | — | — | — | — | — | 37.5 | 37.5 | 65 |
| | | Silica 4 | 25 | 37.5 | 50 | 37.5 | 37.5 | 37.5 | — | — | — | — | — |
| | | Silica 5 | — | — | — | — | — | 37.5 | — | — | — | — | — |
| | | Carbon black | 5 | 5 | 5 | 5 | 5 | 5 | 5 | 5 | 5 | 5 | 5 |
| | | Silane coupling agent 1 | 6.0 | 6.0 | 6.0 | — | — | 6.0 | 6.0 | 6.0 | 6.0 | 6.0 | 5.2 |
| | | Silane coupling agent 2 | — | — | — | — | — | — | — | — | — | — | — |
| | | Silane coupling agent 3 | — | — | — | 3.0 | 3.0 | — | — | — | — | — | — |
| | | Silane coupling agent 4 | — | — | — | — | — | — | — | — | — | — | — |
| | | Silane coupling agent 5 | — | — | — | — | — | — | — | — | — | — | — |
| | | Mineral oil | 10 | 10 | 10 | 10 | 5 | 10 | 10 | 10 | 10 | 10 | 10 |
| | | Resin | — | — | — | — | 5 | — | — | — | — | — | — |
| | | Stearic acid | 2 | 2 | 2 | 2 | 2 | 2 | 2 | 2 | 2 | 2 | 2 |
| | | Zinc oxide | 3 | 3 | 3 | 3 | 3 | 3 | 3 | 3 | 3 | 3 | 3 |
| | | Age resistor | 1.5 | 1.5 | 1.5 | 1.5 | 1.5 | 1.5 | 1.5 | 1.5 | 1.5 | 1.5 | 1.5 |
| | | Wax | 1.5 | 1.5 | 1.5 | 1.5 | 1.5 | 1.5 | 1.5 | 1.5 | 1.5 | 1.5 | 1.5 |
| | Process 2 | Sulfur | 1.5 | 1.5 | 1.5 | 1.5 | 1.5 | 1.5 | 1.5 | 1.5 | 1.5 | 1.5 | 1.5 |
| | | Vulcanization accelerator TBBS | 1.5 | 1.5 | 1.5 | 1.5 | 1.5 | 1.5 | 1.5 | 1.5 | 1.5 | 1.5 | 1.5 |
| | | Vulcanization accelerator DPG | 0.5 | 0.5 | 0.5 | 0.5 | 0.5 | 0.5 | 0.5 | 0.5 | 0.5 | 0.5 | 0.5 |
| Outlet temperature (°C) | | | 150 | 150 | 150 | 165 | 165 | 150 | 150 | 150 | 150 | 150 | 150 |
| Evaluation | | Breaking energy index | 97 | 112 | 124 | 137 | 140 | 102 | 100 | 72 | 89 | 97 | 93 |
| | | Abrasion resistance index | 91 | 95 | 99 | 103 | 102 | 90 | 100 | 75 | 84 | 96 | 91 |
| | | Rolling resistance index | 57 | 63 | 75 | 60 | 61 | 57 | 100 | 62 | 67 | 104 | 108 |
| | | Silica dispersion index | 105 | 104 | 104 | 107 | 107 | 106 | 100 | 105 | 96 | 92 | 84 |
| | | Wet grip performance index | 71 | 74 | 85 | 78 | 98 | 71 | 100 | 63 | 69 | 98 | 95 |
| | | Dry handling stability index | 91 | 92 | 98 | 92 | 93 | 90 | 100 | 75 | 93 | 100 | 100 |
| | | Processability index | 119 | 124 | 129 | 114 | 120 | 119 | 100 | 85 | 135 | 140 | 155 |

[Table 2]

| | | | Example | | | Comparative Example | |
|---|---|---|---|---|---|---|---|
| | | | 7 | 8 | 9 | 6 | 7 |
| Formulation (part by mass) | Process 1 | SBR1 | 100 | 100 | — | 100 | — |
| | | SBR2 | — | — | 100 | — | 100 |
| | | BR1 | — | — | — | — | — |
| | | BR2 | — | — | — | — | — |
| | | BR3 | — | — | — | — | — |
| | | BR4 | — | — | — | — | — |
| | | NR | — | — | — | — | — |
| | | Silica 1 | 37.5 | 37.5 | 37.5 | — | — |
| | | Silica 2 | — | — | — | 75 | 75 |
| | | Silica 3 | — | — | — | — | — |
| | | Silica 4 | 37.5 | 37.5 | 37.5 | — | — |
| | | Silica 5 | — | — | — | — | — |
| | | Carbon black | 5 | 5 | 5 | 5 | 5 |
| | | Silane coupling agent 1 | 6.0 | — | 6.0 | 6.0 | 6.0 |
| | | Silane coupling agent 2 | — | — | — | — | — |
| | | Silane coupling agent 3 | — | 3.0 | — | — | — |
| | | Silane coupling agent 4 | — | — | — | — | — |
| | | Silane coupling agent 5 | — | — | — | — | — |
| | | Mineral oil | 10 | 10 | 10 | 10 | 10 |
| | | Resin | — | — | — | — | — |
| | | Stearic acid | 2 | 2 | 2 | 2 | 2 |
| | | Zinc oxide | 3 | 3 | 3 | 3 | 3 |
| | | Age resistor | 1.5 | 1.5 | 1.5 | 1.5 | 1.5 |
| | | Wax | 1.5 | 1.5 | 1.5 | 1.5 | 1.5 |
| | Process 2 | Sulfur | 1.5 | 1.5 | 1.5 | 1.5 | 1.5 |
| | | Vulcanization accelerator TBBS | 1.5 | 1.5 | 1.5 | 1.5 | 1.5 |
| | | Vulcanization accelerator DPG | 1.0 | 1.0 | 1.0 | 1.0 | 1.0 |
| Outlet temperature (°C) | | | 150 | 165 | 150 | 150 | 150 |
| Evaluation | Breaking energy index | | 105 | 117 | 117 | 100 | 111 |
| | Abrasion resistance index | | 92 | 98 | 102 | 100 | 108 |
| | Rolling resistance index | | 64 | 63 | 84 | 100 | 125 |
| | Silica dispersion index | | 101 | 108 | 98 | 100 | 94 |
| | Wet grip performance index | | 71 | 73 | 66 | 100 | 90 |
| | Dry handling stability index | | 91 | 90 | 96 | 100 | 102 |

[Table 3]

| | | | Example | | | | | | | | Comparative Example | | | | |
|---|---|---|---|---|---|---|---|---|---|---|---|---|---|---|---|
| | | | 10 | 11 | 12 | 13 | 14 | 15 | 16 | 17 | 8 | 9 | 10 | 11 | 12 |
| Formulation (part by mass) | Process 1 | SBR1 | – | – | – | – | – | – | – | – | – | – | – | – | – |
| | | SBR2 | – | – | – | – | – | – | – | – | – | – | – | – | – |
| | | BR1 | 60 | 60 | 60 | 60 | 30 | 30 | 30 | 30 | 60 | 60 | 60 | 60 | 60 |
| | | BR2 | – | – | – | – | 30 | 30 | – | – | – | – | – | – | – |
| | | BR3 | – | – | – | – | – | – | 30 | – | – | – | – | – | – |
| | | BR4 | – | – | – | – | – | – | – | 30 | – | – | – | – | – |
| | | NR | 40 | 40 | 40 | 40 | 40 | 40 | 40 | 40 | 40 | 40 | 40 | 40 | 40 |
| | | Silica 1 | 37.5 | 37.5 | 37.5 | 37.5 | 37.5 | 37.5 | 37.5 | 37.5 | – | 75 | 37.5 | – | – |
| | | Silica 2 | – | – | – | – | – | – | – | – | 75 | – | – | 37.5 | – |
| | | Silica 3 | – | – | – | – | – | – | – | – | – | – | 37.5 | 37.5 | 65 |
| | | Silica 4 | 37.5 | 37.5 | 37.5 | 37.5 | 37.5 | 37.5 | 37.5 | 37.5 | – | – | – | – | – |
| | | Silica 5 | – | – | – | – | – | – | – | – | – | – | – | – | – |
| | | Carbon black | 5 | 5 | 5 | 5 | 5 | 5 | 5 | 5 | 5 | 5 | 5 | 5 | 5 |
| | | Silane coupling agent 1 | – | – | – | – | – | – | – | – | 6.0 | 6.0 | 6.0 | 6.0 | 5.2 |
| | | Silane coupling agent 2 | – | 3.0 | – | – | – | – | – | – | – | – | – | – | – |
| | | Silane coupling agent 3 | 3.0 | – | – | – | 3.0 | 3.0 | 3.0 | 3.0 | – | – | – | – | – |
| | | Silane coupling agent 4 | – | – | 3.0 | – | – | – | – | – | – | – | – | – | – |
| | | Silane coupling agent 5 | – | – | – | 3.0 | – | – | – | – | – | – | – | – | – |
| | | Mineral oil | 10 | 10 | 10 | 10 | 10 | 5 | 5 | 5 | 10 | 10 | 10 | 5 | 5 |
| | | Resin | – | – | – | – | – | 5 | 5 | 5 | – | – | – | – | – |
| | | Stearic acid | 2 | 2 | 2 | 2 | 2 | 2 | 2 | 2 | 2 | 2 | 2 | 2 | 2 |
| | | Zinc oxide | 3 | 3 | 3 | 3 | 3 | 3 | 3 | 3 | 3 | 3 | 3 | 3 | 3 |
| | | Age resistor | 1.5 | 1.5 | 1.5 | 1.5 | 1.5 | 1.5 | 1.5 | 1.5 | 1.5 | 1.5 | 1.5 | 1.5 | 1.5 |
| | | Wax | 1.5 | 1.5 | 1.5 | 1.5 | 1.5 | 1.5 | 1.5 | 1.5 | 1.5 | 1.5 | 1.5 | 1.5 | 1.5 |
| | Process 2 | Sulfur | 1.5 | 1.5 | 1.5 | 1.5 | 1.5 | 1.5 | 1.5 | 1.5 | 1.5 | 1.5 | 1.5 | 1.5 | 1.5 |
| | | Vulcanization accelerator TBBS | 1.5 | 1.5 | 1.5 | 1.5 | 1.5 | 1.5 | 1.5 | 1.5 | 1.5 | 1.5 | 1.5 | 1.5 | 1.5 |
| | | Vulcanization accelerator DPG | – | – | – | – | – | – | – | – | – | – | – | – | – |
| Outlet temperature (°C) | | | 150 | 150 | 150 | 150 | 150 | 150 | 150 | 150 | 150 | 150 | 150 | 150 | 150 |
| Evaluation | | Breaking energy index | 147 | 127 | 145 | 143 | 144 | 147 | 150 | 147 | 100 | 74 | 89 | 96 | 93 |
| | | Abrasion resistance index | 105 | 101 | 104 | 102 | 103 | 102 | 104 | 103 | 100 | 76 | 83 | 94 | 90 |
| | | Rolling resistance index | 58 | 68 | 62 | 65 | 48 | 49 | 52 | 47 | 100 | 61 | 68 | 103 | 112 |
| | | Silica dispersion index | 109 | 103 | 107 | 105 | 111 | 111 | 110 | 109 | 100 | 104 | 92 | 87 | 78 |
| | | Wet grip performance index | 83 | 82 | 81 | 79 | 86 | 106 | 105 | 106 | 100 | 64 | 68 | 97 | 94 |
| | | Dry handling stability index | 93 | 92 | 91 | 89 | 94 | 97 | 98 | 98 | 100 | 75 | 91 | 100 | 100 |

In Comparative Example 1, neither the first silica (silica 4) nor the second silica (silica 1 and silica 5) was used, but silica (silica 2, hereinafter, also referred to as "conventional silica") having a CTAB specific surface area, a BET specific surface area, and an average primary particle size which were at general levels was used. As a result, the rolling resistance was very high compared to those in Examples 1 to 6, and the silica dispersibility was slightly poor. In addition, the breaking energy was inferior to those in Examples 2 to 5.

In Comparative Example 2, the second silica (silica 1) was used, but no other silica was used. As a result, the performances in terms of rolling resistance and silica dispersibility were good, but the breaking energy, abrasion resistance, wet grip performance, and dry handling stability were considerably inferior to those in Examples 1 to 6.

In Comparative Example 3, the second silica (silica 1) and silica 3 were used. Silica 3 (hereinafter, also referred to as "conventional finely-divided silica") had a CTAB specific surface area, a BET specific surface area, and an average primary particle size which met the requirements of the first silica, but had an aggregate size of smaller than that of the first silica. Therefore, in Comparative Example 3, the silica dispersibility was poor, which resulted in poor breaking energy and poor abrasion resistance. The wet grip performance was also slightly poorer than those in Examples 1 to 6. Further, the processability was slightly poorer than those in Examples 1 to 6.

In Comparative Example 4, conventional silica (silica 2) and conventional finely-divided silica (silica 3) were used. In this case, the rolling resistance could not be reduced, and thus the rolling resistance was very high compared to those in Examples 1 to 6. The silica dispersibility was also considerably poor. Further, the processability was poorer than those in Examples 1 to 6.

In Comparative Example 5, only conventional finely-divided silica (silica 3) was used (It is noted that the amount of silica 3 was adjusted so that the rubber composition had almost the same hardness as those in Comparative Example 1 and Examples). As a result, the dry handling stability was good, but the rolling resistance was remarkably increased. The silica dispersibility was also very poor. Therefore, the breaking energy and abrasion resistance were not improved even though the rolling resistance was increased. Further, the processability was poor.

In contrast, in each of Examples 1 to 6, the rolling resistance was small, which means excellent environmental friendliness. Although the rolling resistance was small, the abrasion resistance, dry handling stability, and wet grip performance were not so much reduced, and were still practicable. In particular, as the amount of the first silica (silica 4) was increased, the breaking energy, abrasion resistance, wet grip performance, and dry handling stability were more improved while suppressing an increase in rolling resistance. When the amount of the first silica (silica 4) was reduced and the amount of the second silica (silica 1 or silica 5) was increased, the rolling resistance was remarkably reduced while certain levels of breaking energy, abrasion resistance, wet grip performance, and dry handling stability were maintained. The processability before vulcanization was also maintained at a level that was not so disadvantageous.

In Examples 4 and 5 in which a mercapto group-containing silane coupling agent (silane coupling agent 3) was used and the outlet temperature in Process 1 was increased (high-temperature kneading was performed), the breaking energy and silica dispersibility were further improved. Therefore, the performances in terms of abrasion resistance, wet grip performance, and rolling resistance were further improved.

In Example 5 in which a resin was added by displacing part of oil, compared to Example 4, the wet grip performance was improved similarly to that of Comparative Example 1, and at the same time the breaking energy was further improved while maintaining good performances in terms of rolling resistance and abrasion resistance.

In Example 6 in which the formulation was the same as that of Example 2, except that the second silica (silica 5) with an average primary particle size of larger than that of the second silica (silica 1) used in Examples 1 to 5 was added, the rolling resistance was further reduced compared to that of Example 2.

In other Examples, compared to Comparative Examples, the rolling resistance was remarkably reduced and the breaking energy was also good. Particularly, in Examples 7 and 8 in which modified SBR (SBR1) was used and Examples 14 to 17 in which modified BR (BR2, BR3, BR4) was used, the performances in terms of rolling resistance, breaking energy, silica dispersibility, wet grip performance, and abrasion resistance were improved much more than those in corresponding Comparative Examples. Also in Examples 10 to 13 in which large amounts of NR and unmodified BR (BR1) were used, the same tendencies as described above were observed.

In Comparative Examples 6 and 8, on the other hand, neither the first silica (silica 4) nor the second silica (silica 1 and silica 5) was used, but conventional silica (silica 2) was used similarly to Comparative Example 1. Therefore, the rolling resistance was very increased and inferior to those in corresponding Examples, and the silica dispersibility was also slightly poor. In addition, the breaking energy was inferior to those of corresponding Examples.

In Comparative Example 7 whose formulation was the same as that of Comparative Example 6, except that unmodified E-SBR (SBR 2) was used instead of the modified SBR (SBR1), the breaking energy and abrasion resistance were better, but the performance in terms of rolling resistance was greatly poorer compared to Comparative Example 6. Further, the silica dispersibility was inferior to that in corresponding Example 9.

The performances in Comparative Examples 9 to 12 were inferior to those in corresponding Examples for the same reasons as in Comparative Examples 2 to 5, respectively.

## Claims

**1.** A tire rubber composition, comprising:

a rubber component;
a carbon black;

a first silica; and
a second silica,
wherein the first silica has a CTAB specific surface area of 180 $m^2/g$ or more, a BET specific surface area of 185 $m^2/g$ or more, and an aggregate size of 45 nm or more, and
the second silica has a CTAB specific surface area of 95 $m^2/g$ or less, and a BET specific surface area of 100 $m^2/g$ or less,
wherein the CTAB specific surface area is measured in accordance with ASTM D3765-92, the BET specific surface area is measured in accordance with ASTM D3037-81 and the aggregate size is measured by the disk centrifugal sedimentation granulometric analysis method.

**2.** The tire rubber composition according to claim 1,
wherein the total amount of natural rubber and butadiene rubber in 100% by mass of the rubber component is 10% by mass or more.

**3.** The tire rubber composition according to claim 1 or 2,
wherein the total amount of modified styrene-butadiene rubber and modified butadiene rubber in 100% by mass of the rubber component is 25% by mass or more.

**4.** The tire rubber composition according to any one of claims 1 to 3,
which comprises a mercapto group-containing silane coupling agent.

**5.** The tire rubber composition according to claim 4,
wherein the silane coupling agent is a copolymer comprising units A represented by the following formula (1) and units B represented by the following formula (2), and the proportion of the units B is 1 to 70 mol% of the total molar amount of the units A and the units B:

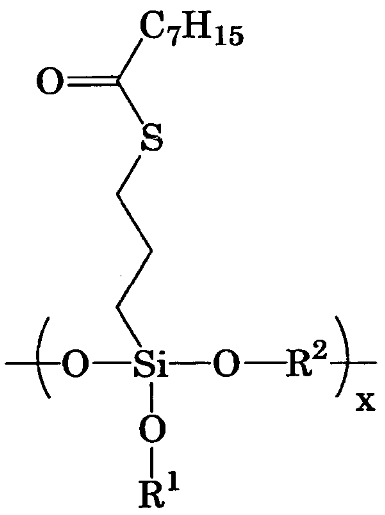

(1)

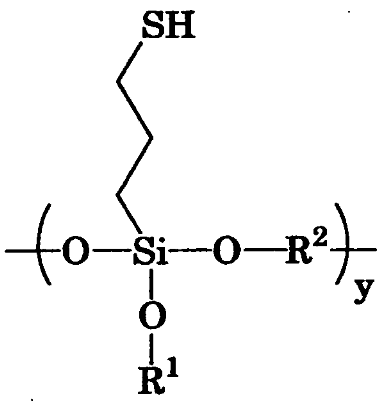

(2)

wherein x is an integer of 0 or more; y is an integer of one or more; $R^1$ represents hydrogen, a halogen, a branched or unbranched C1-30 alkyl or alkylene group, a branched or unbranched C2-30 alkenyl or alkenylene group, a branched or unbranched C2-30 alkynyl or alkynylene group, or a group in which a hydrogen atom at the end of the alkyl or alkenyl group is replaced with a hydroxy or carboxyl group; $R^2$ represents hydrogen, a branched or unbranched C1-30 alkylene or alkyl group, a branched or unbranched C2-30 alkenylene or alkenyl group, or a branched or unbranched C2-30 alkynylene or alkynyl group; and $R^1$ and $R^2$ may form a ring structure together.

**6.** The tire rubber composition according to any one of claims 1 to 5,
wherein the total amount of the first silica and the second silica is 20 to 150 parts by mass, and the amount of the carbon black is 100 parts by mass or less, based on 100 parts by mass of the rubber component.

**7.** The tire rubber composition according to any one of claims 1 to 6, which is used for a tread.

**8.** A pneumatic tire produced using the rubber composition according to any one of claims 1 to 7.

**Patentansprüche**

**1.** Reifenkautschukzusammensetzung, umfassend:

eine Kautschukkomponente,
einen Ruß,
ein erstes Siliciumdioxid und
ein zweites Siliciumdioxid,
wobei das erste Siliciumdioxid eine spezifische CTAB-Oberfläche von 180 $m^2/g$ oder mehr, eine spezifische BET-Oberfläche von 185 $m^2/g$ oder mehr und eine Aggregatgröße von 45 nm oder mehr aufweist, und
das zweite Siliciumdioxid eine spezifische CTAB-Oberfläche von 95 $m^2/g$ oder weniger und eine spezifische BET-Oberfläche von 100 $m^2/g$ oder weniger aufweist,
wobei die spezifische CTAB-Oberfläche gemäß ASTM D3765-92 gemessen ist, die spezifische BET-Oberfläche gemäß ASTM D3037-81 gemessen ist, und die Aggregatgröße durch ein granulometrisches Tellerzentrifugalsedimentations-Analyseverfahren gemessen ist.

**2.** Reifenkautschukzusammensetzung nach Anspruch 1, wobei die Gesamtmenge von Naturkautschuk und Butadienkautschuk in 100 Masse-% der Kautschukkomponente 10 Masse-% oder mehr beträgt.

**3.** Reifenkautschukzusammensetzung nach Anspruch 1 oder 2, wobei die Gesamtmenge von modifiziertem Styrol-Butadien-Kautschuk und modifiziertem Butadienkautschuk in 100 Masse-% der Kautschukkomponente 25 Masse-% oder mehr beträgt.

**4.** Reifenkautschukzusammensetzung nach einem der Ansprüche 1 bis 3, die ein eine Mercaptogruppe enthaltendes Silankopplungsmittel umfasst.

**5.** Reifenkautschukzusammensetzung nach Anspruch 4, wobei das Silankopplungsmittel ein Copolymer ist, das Einheiten A umfasst, die durch die folgende Formel (1) dargestellt sind, und Einheiten B, die durch die folgende Formel (2) dargestellt sind, und der Anteil der Einheiten B 1 bis 70 Mol-% der gesamten molaren Menge der Einheiten A und der Einheiten B beträgt:

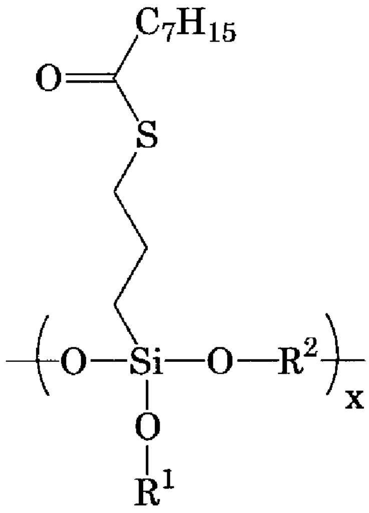

(1)

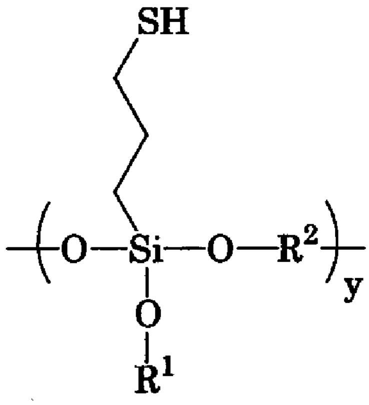

(2)

wobei x eine ganze Zahl von 0 oder größer ist; y eine ganze Zahl von 1 oder größer ist; $R^1$ für Wasserstoff, ein Halogen, eine verzweigte oder unverzweigte C1-30-Alkyl- oder Alkylengruppe, eine verzweigte oder unverzweigte C2-30-Alkenyl- oder Alkenylengruppe, eine verzweigte oder unverzweigte C2-30-Alkynyl- oder Alkynylengruppe oder eine Gruppe steht, in welcher ein Wasserstoffatom am Ende der Alkyl- oder Alkenylgruppe durch eine Hydroxy- oder Carboxylgruppe ersetzt ist; $R^2$ für Wasserstoff, eine verzweigte oder unverzweigte C1-30-Alkylen- oder Alkylgruppe, eine verzweige oder unverzweigte C2-30-Alkenylen- oder Alkenylgruppe oder eine verzweigte oder unverzweigte C2-30-Alkynylen- oder Alkynylgruppe steht; und $R^1$ und $R^2$ zusammen eine Ringstruktur bilden können.

**6.** Reifenkautschukzusammensetzung nach einem der Ansprüche 1 bis 5, wobei die Gesamtmenge des ersten Siliciumdioxids und des zweiten Siliciumdioxids 20 bis 150 Masseteile beträgt, und die Menge des Rußes 100 Masseteile oder weniger beträgt, bezogen auf 100 Masseteile der Kautschukkomponente.

**7.** Reifenkautschukzusammensetzung nach einem der Ansprüche 1 bis 6, die für eine Lauffläche verwendet wird.

**8.** Luftreifen, der unter Verwendung der Kautschukzusammensetzung nach einem der Ansprüche 1 bis 7 hergestellt ist.

## Revendications

**1.** Composition de caoutchouc pour pneumatique, comprenant :

un composant caoutchouc ;
un noir de carbone ;
une première silice ; et
une seconde silice,
dans laquelle la première silice a une superficie spécifique CTAB de 180 $m^2/g$ ou plus, une superficie spécifique

BET de 185 $m^2$/g ou plus, et une taille d'agrégat de 45 nm ou plus, et
la seconde silice a une superficie spécifique CTAB de 95 $m^2$/g ou moins, et une superficie spécifique BET de 100 $m^2$/g ou moins,
dans laquelle la superficie spécifique CTAB est mesurée en accord avec la norme ASTM D3765-92, la superficie spécifique BET est mesurée en accord avec la norme ASTM D3037-81 et la taille d'agrégat est mesurée par la méthode d'analyse granulométrique avec sédimentation centrifuge sur disque.

**2.** Composition de caoutchouc pour pneumatique selon la revendication 1,
dans laquelle la quantité totale de caoutchouc naturel et de caoutchouc au butadiène dans 100 % en masse du composant caoutchouc est de 10 % en masse ou plus.

**3.** Composition de caoutchouc pour pneumatique selon la revendication 1 ou 2,
dans laquelle la quantité totale de caoutchouc styrène-butadiène modifié et de caoutchouc butadiène modifié dans 100 % en masse du composant caoutchouc est de 25 % en masse ou plus.

**4.** Composition de caoutchouc pour pneumatique selon l'une quelconque des revendications 1 à 3,
qui comprend un agent de couplage au silane contenant un groupe mercapto.

**5.** Composition de caoutchouc pour pneumatique selon la revendication 4,
dans laquelle l'agent de couplage au silane et un copolymère comprenant des unités A représentées par la formule suivante (1) et des unités B représentées par la formule suivante (2), et la proportion des unités B est de 1 à 70 moles % de la quantité molaire totale des unités A et des unités B

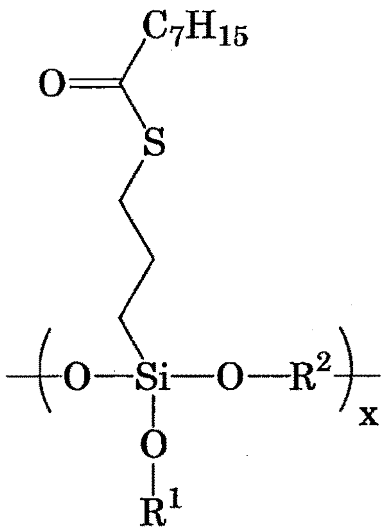

(1)

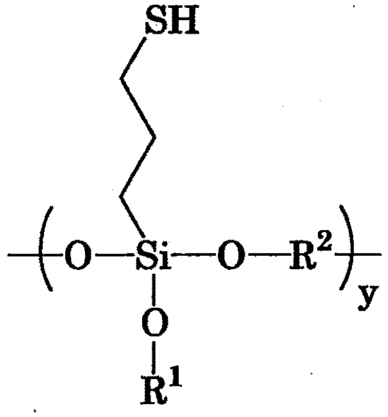

(2)

dans lesquelles x est un entier égal à 0 ou plus ; y est un entier égal à 0 ou plus ; R1 représente l'hydrogène, un halogène, un groupe alkyle ou alkylène C1-30 ramifié ou non ramifié, un groupe alkényle ou alkénylène C2-30

ramifié ou non ramifié, un groupe alkynyle ou alkynylène C2-30 ramifié ou non ramifié, ou un groupe dans lequel un atome d'hydrogène à l'extrémité du groupe alkyle ou alkényle est remplacé par un groupe hydroxy ou un groupe carboxyl ; R2 représente l'hydrogène, un groupe alkylène ou alkyle C1-30 ramifié ou non ramifié, un groupe alkénylène ou alkényle C2-30 ramifié ou non ramifié, un groupe alkynylène ou alkynyle C2-30 ramifié ou non ramifié ; et R1 et R2 peuvent former ensemble une structure cyclique.

**6.** Composition de caoutchouc pour pneumatique selon l'une quelconque des revendications 1 à 5,
dans laquelle la quantité totale de la première silice et de la seconde silice est de 20 à 150 parties en masse, et la quantité de noir de carbone est de 100 parties en masse ou moins, sur la base de 100 parties en masse du composant caoutchouc.

**7.** Composition de caoutchouc pour pneumatique selon l'une quelconque des revendications 1 à 6, qui est utilisée pour une bande de roulement.

**8.** Bandage pneumatique produit en utilisant la composition de caoutchouc selon l'une quelconque des revendications 1 à 7.

Fig. 1

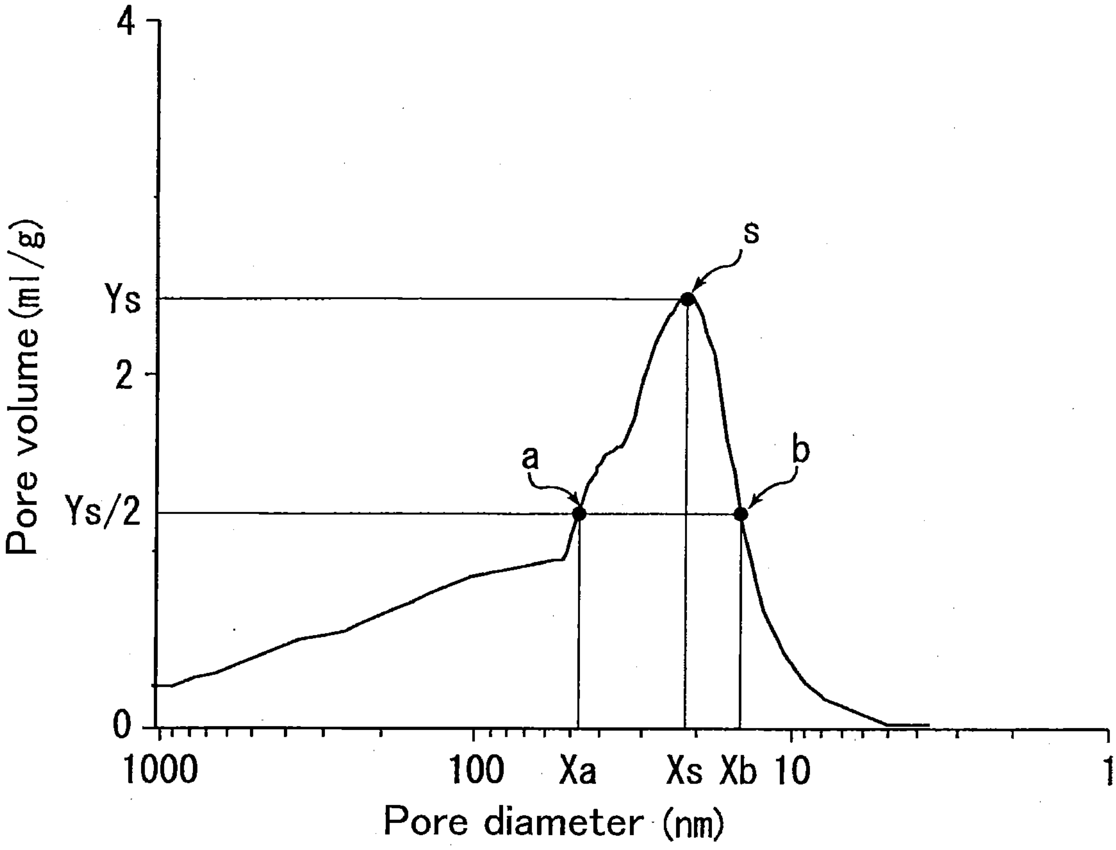

4
Ys
2
Ys/2
0
Pore volume (ml/g)
s
a
b
1000
100
Xa
Xs
Xb
10
1
Pore diameter (nm)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2009048006 A1
- EP 1078954 A2
- WO 0073092 A1
- JP 2008031244 A
- JP H0653768 B
- JP H0657767 B